# EUROPÄISCHE PATENTSCHRIFT

(11) **EP 4 168 231 B1**
(45) Veröffentlichungstag und Bekanntmachung des Hinweises auf die Patenterteilung: **22.10.2025**
(21) Anmeldenummer: 21731820.3
(22) Anmeldetag: 16.06.2021
(51) Int. Cl.: B29C 41/06, B29C 41/52

(54) **ROTATIONSGUSSVORRICHTUNG SOWIE VERFAHREN ZUM BETREIBEN EINER ROTATIONSGUSSVORRICHTUNG**
ROTARY CASTING DEVICE AND METHOD OF OPERATING A ROTARY CASTING DEVICE
DISPOSITIF DE COULÉE ROTATIVE ET PROCEDE DE FONCTIONNEMENT D'UN DISPOSITIF DE COULÉE ROTATIVE

(30) Priorität: 19.06.2020 LU 101868; 19.06.2020 LU 101869
(43) Veröffentlichungstag der Anmeldung: 26.04.2023
(73) Patentinhaber: ROTO evolution GmbH, 08451 Crimmitschau (DE)
(72) Erfinder: NAUMANN, Frank, 08451 Crimmitschau (DE)
(74) Vertreter: Hoffmann, Jürgen
(86) Internationale Anmeldenummer: PCT/EP2021/066202
(87) Internationale Veröffentlichungsnummer: WO 2021/255074

(56) Entgegenhaltungen:
- EP-A1- 3 318 382
- EP-A1- 3 656 526
- EP-A2- 2 844 446
- WO-A1-99/56929
- CN-C- 100 439 064
- DE-A1- 102012 217 763
- LU-B1- 100 802
- US-A- 3 704 084
- US-A- 6 036 897
- US-A1- 2002 051 834

## Beschreibung

Die Erfindung betrifft ein Verfahren zum Betreiben einer Rotationsgussvorrichtung, die eine rotierbar gelagerte Rotationsgussformhalterung mit einer Rotationsgussform aufweist.

Die Erfindung betrifft außerdem eine Rotationsgussvorrichtung, die eine rotierbar gelagerte Rotationsgussformhalterung mit einer Rotationsgussform aufweist.

Um Rotationsguss-Formkörper aus Kunststoffen herstellen zu können, ist es erforderlich, eine mit Rotationsgussmaterial beschickte Rotationsgussform zu rotieren und dabei auf eine derart hohe Temperatur zu heizen, dass das zumeist pulverförmige oder granulatförmige, insbesondere mikrogranulatförmige, Rotationsgussmaterial während des Rotationsprozesses schmilzt und sich an der Innenwandung der Gussform anlagert. Die Rotationsbewegung darf hierbei nicht ausschließlich um eine einzige Rotationsachse erfolgen; vielmehr ist es erforderlich, die Rotationsgussmaterial in mindestens zwei Dimensionen zu rotieren.

Aus US 6,555,037 B1 ist eine Mehrachsenrotationsvorrichtung bekannt, die ein Trägerteil mit Antriebsrädern und ein kugelförmiges Rahmenteil, das eine Gussform beinhaltet, aufweist. Das kugelförmige Rahmenteil hat Paare von kreisförmigen Kerben, in die die Antriebsräder eingreifen können.

Aus WO 2014/000 724 A1 ist eine Rotationsvorrichtung für Rotationsguss-Formkörper bekannt, die eine kugelförmige Aufnahmevorrichtung für wenigstens eine Gussform, eine Haltevorrichtung für die kugelförmige Aufnahmevorrichtung und eine Antriebseinheit zum Bewirken der Rotationsbewegung aufweist. Die kugelförmige Aufnahmevorrichtung besteht aus zwei Teilen und kann in einer Trennebene geöffnet werden, um die Gussform zu beschicken oder um den fertigen Rotationsgussformkörper aus der Gussform entnehmen zu können. Die kugelförmige Aufnahmevorrichtung wird mittels eines motorangetriebenen, auf der Außenseite abrollenden Antriebsrades zur Rotation angetrieben.

Aus EP 3 318 382 A1 ist eine kugelförmige Aufnahmevorrichtung zum Aufnehmen wenigstens einer Rotationsgussform, die dazu ausgebildet und bestimmt ist, in einer Rotationsvorrichtung mittels eines auf der Außenseite der kugelförmigen Aufnahmevorrichtung abrollenden Antriebsrades zur Rotation angetrieben zu werden, wobei die Aufnahmevorrichtung wenigstens eine Führungsvorrichtung aufweist, die bewirkt, dass ein auf der Außenseite der kugelförmigen Aufnahmevorrichtung abrollendes Antriebsrad einem vorbestimmten Abrollweg auf der Außenseite der kugelförmigen Aufnahmevorrichtung folgt. Der Abrollweg weist zusätzlich zu einer Krümmung, die durch die Kugelform der Aufnahmevorrichtung bedingt ist, eine weitere Krümmung auf.

Aus der Deutschen Offenlegungsschrift DE 10 2012 217763 A1 sind eine Messeanordnung und ein Messverfahren für eine Rotation Formanlage bekannt. Die Messeanordnung ist zur kontinuierlichen Bestimmung der Rotationsposition des Formwerkzeugs und zur Übermittlung eines Signals an eine Datenverarbeitungseinrichtung eingerichtet. Die Datenverarbeitungseinrichtung kann zur Steuerung der Rotation des Formwerkzeugs auf der Grundlage der gemessenen Positionsinformation eingerichtet sein.

Aus CN 100 439 064 C ist ein Kontrollverfahren für eine Rotation Vorrichtung bekannt, bei dem verschiedene Rotationsparameter berücksichtigt werden.

Aus der europäischen Patentanmeldung EP 3 656 526 A1 sind ein System und ein Verfahren zum Kontrollieren eines Rotationsgussprozesses bekannt. Das System beinhaltet ein Steuersystem, das ein geeignetes Temperatur-Zeit-Programm und ein geeignetes Bewegungs-Zeit-Programm für das Rotationsformen bestimmt, wobei das Steuerungssystem Feedback-Signale über wenigstens einen Prozessparameter von einem Sensor während des Rotationsprozesses erhält.

Es ist die Aufgabe der vorliegenden Erfindung, ein Verfahren anzugeben, das eine effiziente Herstellung von Rotationsgussprodukten ermöglicht.

Die Aufgabe wird durch ein Verfahren der eingangs genannten Art gelöst, das dadurch gekennzeichnet ist, dass eine Trajektorie eines Referenzpunktes eines bei einem Rotationsvorgang rotierenden Bauteils, insbesondere der Rotationsgussformhalterung oder der Rotationsgussform, für einen Rotationsvorgang aus einer von mehreren möglichen mit der Rotationsgussvorrichtung ausführbaren Trajektorien ausgewählt wird und dass anschließend ein Rotationsvorgang ausgeführt wird, bei dem sich in die Rotationsgussform eingebrachtes Rotationsgussmaterial an der Innenseite der Rotationsgussform anlagert und bei dem sich der Referenzpunkt entlang der festgelegten Trajektorie bewegt.

Es ist eine weitere Aufgabe der vorliegenden Erfindung, eine Rotationsgussvorrichtung anzugeben, die eine effiziente Herstellung von Rotationsgussprodukten ermöglicht.

Die Aufgabe wird durch eine Rotationsgussvorrichtung gelöst, die dadurch gekennzeichnet ist, dass eine Trajektorie eines Referenzpunktes eines bei einem Rotationsvorgang rotierenden Bauteils, insbesondere der Rotationsgussformhalterung oder der Rotationsgussform, für einen Rotationsvorgang aus einer von mehreren möglichen mit der Rotationsgussvorrichtung ausführbaren Trajektorien auswählbar ist und dass eine Steuerungsvorrichtung nach einem Auswahlvorgang einen Rotationsvorgang, bei dem sich in die Rotationsgussform eingebrachtes Rotationsgussmaterial an der Innenseite der Rotationsgussform anlagert, derart steuert, dass sich der Referenzpunkt entlang einer ausgewählten Trajektorie bewegt.

Die Erfindung hat den ganz besonderen Vorteil, dass Rotationsgussprodukte schneller hergestellt werden könne, indem eine individuell an das jeweilig herzustellende Produkt angepasste Trajektorie ausgewählt wird. Beispielsweise kann die Trajektorie derart ausgewählt werden, dass wenigstens eine Stelle der Innenseite der Rotationsgussform bei dem Rotationsvorgang frei von Rotationsgussmaterial bleibt. Dies kann insbesondere dadurch erreicht werden, dass die freizuhaltende Stelle bei dem Rotationsvorgang, bei dem der Referenzpunkt sich entlang der Trajektorie bewegt, niemals unten angeordnet wird. Beispielsweise bei der Herstellung eines Pflanzengefäßes wird hierdurch vorteilhaft erreicht, dass die obere Öffnung bereits bei dem Rotationsgussvorgang frei bleibt, während bei den bislang üblichen Rotationsguss-Herstellverfahren die obere Öffnung nach dem Rotationsgussvorgang in einem separaten Arbeitsschritt mit einem Messer frei geschnitten werden musste. Insoweit wird erfindungsgemäß in einem solchen Fall Zeit und Rotationsgussmaterial eingespart.

Alternativ oder zusätzlich kann die Trajektorie erfindungsgemäß derart ausgewählt werden, dass sich bei dem Rotationsvorgang an wenigstens einer Stelle der Innenseite der Rotationsgussform besonders viel Rotationsgussmaterial anlagert. Dies kann beispielsweise dadurch erreicht werden, dass die Stelle der Innenseite der Rotationsgussform bei dem Rotationsvorgang, bei dem der Referenzpunkt sich entlang der Trajektorie bewegt, öfter unten angeordnet wird, als alle anderen Stellen der Innenseite der Rotationsgussform. Beispielsweise kann so der Bodenbereich eines herzustellenden Pflanzengefäßes besonders dick und damit besonders stabil ausgebildet werden, während beispielsweise die Seitenwandung dünner ausgebildet werden kann. Auf diese Weise kann insbesondere Rotationsgussmaterial eingespart werden.

Die ausgewählte Trajektorie ist die Bahnkurve, entlang der sich der Referenzpunkt während des Rotationsvorganges, insbesondere vom Beginn des Rotationsvorganges bis zum Ende eines Heizzeitraumes, innerhalb dem die rotierende Rotationsgussform beheizt wird, oder bis zum Ende eines Abkühlvorganges, bei dem die rotierende Rotationsgussform, insbesondere durch aktives oder passives Abkühlen, abkühlt, bewegt.

Die Erfindung ermöglicht es insbesondere, Rotationsgussmaterial einzusparen, weil gezielt Stellen der Innenseite der Rotationsgussform frei gehalten werden können und/oder Stellen gezielt dünner ausgebildet werden können als andere, beispielsweise wenn dort nur eine geringere Stabilität erforderlich ist.

Die Erfindung ermöglicht es sogar Gegenstände herzustellen, deren Herstellung im Rotationsgussverfahren bislang nur schwierig oder gar nicht möglich war. Beispielsweise kann erfindungsgemäß auch eine Rotationsgussform verwendet werden, die ein nach außen hin gerichtetes enges Sackloch aufweist, damit das herzustellende Produkt an dieser Stelle eine nach außen gerichtete Spitze aufweist. Die Verwendung einer solchen Rotationsgussform wäre bei Anwendung des herkömmlichen Rotationsgussverfahrens sehr problematisch, weil das Rotationsgussmaterial bei einer kontinuierlichen Rotation nicht in ausreichender Menge in das Sackloch hineinfällt. Erfindungsgemäß ist es jedoch möglich, die Trajektorie so zu wählen, dass das Sackloch besonders oft nach unten ausgerichtet ist und dass die Rotationsgeschwindigkeit immer dann (ggf. sogar bis auf Null) verringert wird, wenn sich das Sackloch unten befindet. Auf diese Weise wird erreicht, dass das Rotationsgussmaterial genügend Zeit hat, in das Sackloch zu gelangen. Hierbei kann erfindungsgemäß insbesondere dem Umstand Rechnung getragen werden, dass sich das granulatförmige Rotationsgussmaterial innerhalb der Rotationsgussform bei einem Rotationsvorgang nicht wie eine Flüssigkeit verhält. Vielmehr wird das relativ zur Rotationsgussform jeweils im unteren Bereich vorübergehend ruhende granulatförmige Rotationsgussmaterial während des Rotationsvorganges innerhalb der Rotationsgussform stets zunächst ein ganzes Stück mitgenommen, ohne dass es sich relativ zu der Rotationsgussform bewegt, bis es irgendwann zu rutschen beginnt und unten wieder zur Ruhe kommt, wobei sich dieser Vorgang bei fortgesetzter Rotation fortlaufend wiederholt. Insoweit verteilt sich das Granulat innerhalb der Form nicht kontinuierlich. Auch diesem Umstand kann erfindungsgemäß durch die Wahl der jeweils geeigneten Trajektorie Rechnung getragen werden.

Bei einer besonders vorteilhaften Ausführung kann der Benutzer wenigstens eine mit der Rotationsgussvorrichtung ausführbare Trajektorie, insbesondere über eine Schnittstelle der Rotationsgussvorrichtung, eingeben und zu den mehreren möglichen mit der Rotationsgussvorrichtung ausführbaren Trajektorien, aus denen eine Trajektorien auswählbar ist, hinzufügen. Beispielsweise kann die Rotationsgussvorrichtung eine USB-Schnittstelle oder eine Datenschnittstelle aufweisen, über die Daten, die eine Trajektorie charakterisieren, empfangen werden können.

Insbesondere im Hinblick auf eine Ausführung der Rotationsgussvorrichtung als Kugelrotationsvorrichtung, kann vorteilhaft vorgesehen sein, dass der Referenzpunkt derart gewählt wird, dass die Trajektorie ausschließlich auf einer Kugelfläche verläuft. Bei einer Kugelrotationsvorrichtung kann beispielsweise der Punkt auf der Außenseite der kugelförmigen Rotationsgussformhalterung als Referenzpunkt gewählt werden, der sich zu Beginn des Rotationsvorganges ganz unten (und ggf. in Kontakt mit einem Antriebsrad) befindet. Hinsichtlich der Auswahl des Referenzpunktes gibt es jedoch keine grundsätzlichen Einschränkungen. Vielmehr kann prinzipiell jeder Punkt der bei einem Rotationsvorgang rotierenden Bauteile als Referenzpunkt gewählt werden. Der Referenzpunkt kann ein vorbestimmter oder von dem Benutzer festlegbarer Punkt eines bei einem Rotationsvorgang rotierenden Bauteils, insbesondere der Rotationsgussformhalterung oder der Rotationsgussform, sein. Insbesondere kann eine Referenzpunkt-Eingabevorrichtung zum Eingeben von Informationen, die den Referenzpunkt charakterisieren, vorhanden sein. Beispielsweise kann der Benutzer den Referenzpunkt dadurch festlegen, dass er die Rotationsgussform in eine Drehstellung bringt, in der der als Referenzpunkt festzulegende Punkt an einer bestimmten Stelle im Raum angeordnet ist (beispielsweise ganz oben oder ganz unten) und er dies dann der Rotationsgussvorrichtung (beispielsweise durch einen Tastendruck oder einen Mausklick) mitteilt.

An dem Beispiel einer Kugelrotationsvorrichtung, bei der als Referenzpunkt der Punkt auf der Außenseite der kugelförmigen Rotationsgussformhalterung gewählt wird, der sich zu Beginn des Rotationsvorganges ganz unten und in Kontakt mit einem Antriebsrad befindet, kann besonders gut anschaulich erläutert werden, wie sich der Referenzpunkt bei einem Rotationsvorgang entlang der Trajektorie bewegt, indem man sich vorstellt, dass das Antriebsrad das Vorderrad eines Motorrades ist, mit dem man auf der Außenseite der der kugelförmigen Rotationsgussformhalterung entlang der Trajektorie fährt. Hierbei können symmetrische, aber auch vollkommen unsymmetrische Trajektorien abgefahren werden. Beispielsweise kann sich an eine enge 90-Grad-Linkskurve eine kurze Geradeausfahrt und dann eine langgezogene 270-Grad-Rechtskurve anschließen.

Die Rotationsgussformhalterung und/oder die Rotationsgussform bleiben bei einer vorteilhaften Ausführung der Rotationsgussvorrichtung während des gesamten Rotationsvorganges ortsfest und führen lediglich die Rotationsbewegung derart aus, dass sich der Referenzpunkt entlang der Trajektorie bewegt. Eine solche Ausführung hat den ganz besonderen Vorteil, dass der Verlauf der jeweiligen Trajektorie für den Benutzer einfach und schnell erfassbar ist. Insbesondere ist die Auswahl einer für die aktuell jeweils zu verwendenden Rotationsgussform geeigneten Trajektorie besonders unkompliziert.

Bei einer ganz besonderen Ausführung rotiert die Steuerungsvorrichtung die Rotationsgussform umso schneller, je höher eine vorgewählte oder eine gemessene Temperatur der Rotationsgussform ist. Hierbei kann jedoch vorgesehen sein, dass einzelne Trajektoriensegment langsamer durchlaufen werden, als andere Trajektoriensegmente, wobei dies vom Benutzer vorgegeben werden kann. Erfindungsgemäß wurde nämlich erkannt, dass es für einen effizient und schnell ausführbaren Rotationsguss ganz insbesondere auf das Zusammenspiel von Temperatur und das Bewegungsverhalten des Rotationsgussmaterials innerhalb der Rotationsgussform ankommt. Für das Bewegungsverhalten sind die Auswahl der geeigneten Trajektorie und die Auswahl des Verlaufs der Rotationsgeschwindigkeit entlang der Trajektorie von besonderer Wichtigkeit.

Bei einer vorteilhaften Ausführung beinhaltet das Auswählen der Trajektorie, dass der Benutzer für jeden Abschnitt Form und Länge auswählen kann, soweit die verwendete Rotationsgussvorrichtung in der Lage ist, die Rotation entsprechend auszuführen. Bei einer Rotationsgussvorrichtung, die als Kugelrotationsgussvorrichtung ausgebildet ist, insbesondere bei einer Kugelrotationsgussvorrichtung, bei der die Kugel während des Rotationsvorganges ortsfest bleibt, kann jede beliebige Trajektorie ausgewählt werden, da eine solche Rotationsgussvorrichtung unendlich viele mögliche Rotationsachsen für die Rotation der Kugel anbietet.

Bei einer ganz besonders vorteilhaften Ausführung wird die Trajektorie durch Eingeben von Trajektoriensegmenten und Aneinanderfügen der eingegebenen Trajektoriensegmente festgelegt. Eine solche Vorgehensweise ermöglicht es dem Benutzer, eine an die jeweils gerade zu verwendende Rotationsgussform individuell angepasste Trajektorie zusammenzustellen.

Beispielsweise kann eine Eingabevorrichtung vorhanden sein, mittels die Trajektoriensegmente eingebbar sind. Die Eingabevorrichtung kann eine Anzeigevorrichtung aufweisen, die eine Auswahldarstellung unterschiedlicher Trajektoriensegmenttypen anzeigt, aus der Trajektoriensegmente mittels eines Eingabegerätes auswählbar sind. Die Eingabevorrichtung kann ein Eingabegerät beispielsweise in Form einer Computermaus oder in Form eines Touchscreens oder in Form einer Tastatur aufweisen.

Alternativ oder zusätzlich kann vorteilhaft vorgesehen sein, dass jedem Trajektoriensegment eine Geschwindigkeit zugeordnet wird, mit der sich der Referenzpunkt bei einem Rotationsvorgang entlang dem Trajektoriensegment bewegt. Hierdurch kann vorteilhaft beispielsweise erreicht werden, dass sich an manchen Stellen, an denen die Rotationsbewegung langsamer ist, eine dickere Schicht von Rotationsgussmaterial anlagert, als an Stellen, an denen die Rotationsbewegung schneller ist. Es ist beispielsweise auch möglich, die Rotationsbewegung zu verlangsamen um zu erreichen, dass das Rotationsmaterial in Ausbuchtungen gelangen kann, über die es bei schneller Rotation hinweg fallen würde. Insbesondere kann vorteilhaft vorgesehen sein, dass einem oder mehreren Trajektoriensegmenten nicht lediglich eine konstante Geschwindigkeit, sondern ein zeitlicher Geschwindigkeitsverlauf zugeordnet wird, mit dem sich der Referenzpunkt bei einem Rotationsvorgang entlang dem Trajektoriensegment bewegt. Eine solche Ausführung ist im Hinblick auf das herzustellende Produkt besonderes präzise.

Das Eingeben eines Trajektoriensegments kann die Eingabe wenigstens eines Parameters aus der Gruppe Trajektoriensegmentlänge, Trajektoriensegmentkrümmung und Trajektoriensegmentkrümmungsverlauf umfassen. Insbesondere kann vorgesehen sein, dass der Benutzer jeweils einen bereits vordefinierten Trajektoriensegmenttypen auswählt und durch Festlegen der räumlichen Länge und/oder der Krümmung und/oder des Krümmungsverlaufs anpasst.

Insbesondere kann vorteilhaft vorgesehen sein, dass sich unmittelbar aufeinanderfolgende Trajektoriensegmente durch die Trajektoriensegmentlänge und/oder die Trajektoriensegmentkrümmung und/oder Trajektoriensegmentskrümmungsverlauf und/oder durch eine zugeordnete Geschwindigkeit und/oder einen zugeordneten Geschwindigkeitsverlauf voneinander unterscheiden. Auf diese Weise ist es möglich, individuell an die jeweilige Rotationsgussform angepasste Trajektorien zu realisieren. Insbesondere kann die Trajektorie unsymmetrisch ausgebildet sein.

Bei einer ganz besonders vorteilhaften Ausführung wird dem Benutzer eine Auswahldarstellung unterschiedlicher Trajektoriensegmenttypen angezeigt, aus der er einzelne nacheinander auswählen kann, um die Trajektorie zusammenzustellen und auf diese Weise auszuwählen. In der Auswahldarstellung können die Trajektoriensegmenttypen beispielsweise jeweils in einer perspektivischen Darstellung dargestellt sein. Alternativ oder zusätzlich ist es auch möglich, dass die Trajektoriensegmenttypen in der Auswahldarstellung jeweils als Projektion auf eine ebene Fläche dargestellt werden. Insbesondere kann die Projektion eine stereoskopische Projektion oder eine Parallelprojektion oder eine Mercator-Projektion sein. Eine solche Projektion erhöht die Anschaulichkeit für den Benutzer und vereinfacht das Zusammenstellen der Trajektorie aus Trajektoriensegmenten.

Die Auswahldarstellung kann beispielsweise wenigstens einen Trajektoriensegmenttypen umfassen, dessen Projektion eine Projektion aus der folgenden Gruppe ist: Kreissegment, Parabelsegment, Geradesegment, 90-Grad-Bogen, 180-Grad-Bogen, 270-Grad-Bogen, 360-Grad-Bogen, Schleifensegment, Projektion einer Kreisevolvente auf eine Kugeloberfläche, Spiralsegment, Stop-Segment. Bei einer besonderen Ausführung kann der Benutzer bei der Auswahl eines Bogens den Bogenradius vorgeben. Ein Stopsegment kann beinhalten, dass die Rotation der Kugel, insbesondere für einen vorgegeben oder vorgebbaren Zeitraum, angehalten wird. Ein Schleifensegment beinhaltet eine vorgegebene Abfolge von Linksbogen, Geradeaussegment, Rechtsbogen, Geradeaussegment, Linksbogen, Geradeaussegment usw., wobei der Benutzer vorzugsweise individuell die Länge der Links- und Rechtsbögen, die Radien der Links- und Rechtsbögen und die Länge der Geradeaussegmente vorgeben kann. Hinsichtlich der geometrischen Form der Trajektoriensegmenttypen und damit der geometrischen Form der ausgewählten Trajektoriensegmente gibt es jedoch keine grundsätzlichen Beschränkungen.

Bei einer ganz besonders vorteilhaften Ausführung wird die festgelegte Trajektorie dem Benutzer in Form einer Projektion auf eine zweidimensionale Ebene angezeigt. Diese Anzeige der Trajektorie kann dem Benutzer als Voransicht dienen, an Hand der er beurteilen kann, ob die ausgewählte (und gegebenenfalls noch weiter zu ergänzende) Trajektorie in allen Einzelheiten für die zu verwendende Rotationsgussform angepasst und geeignet ist. Die Projektion kann insbesondere eine Parallelprojektion oder eine stereografische Projektion oder eine Mercator-Projektion sein. Eine solche Projektion erhöht die Anschaulichkeit für den Benutzer und vereinfacht das Zusammenstellen der Trajektorie aus Trajektoriensegmenten. Grundsätzlich ist erfindungsgemäß jede beliebige Trajektorie möglich.

Wie bereits erwähnt, kann die Rotationsgussvorrichtung insbesondere als eine Kugelrotationsvorrichtung ausgebildet sein. Hierbei kann vorteilhaft insbesondere vorgesehen sein, dass die Rotationsgussformhalterung als Kugel ausgebildet ist, die bei dem Rotationsvorgang zur Rotation angetrieben wird.

Bei einer besonderen Ausführung wird die kugelförmige Rotationsgussformhalterung mittels Antriebsrades angetrieben, das um eine erste Rotationsachse rotiert und das auf der Oberfläche der Kugel abrollt. Das Antriebsrad kann hierbei von einem ersten Antriebsmotor angetrieben sein. Zusätzlich kann vorteilhaft vorgesehen sein, dass das Antriebsrad um eine zur ersten Rotationsachse senkrechte zweite Rotationsachse drehbar gelagert ist und ein zweiter Antriebsmotor vorhanden ist, der das Antriebsrad zusammen mit dem ersten Antriebsmotor um die zweite Rotationsachse drehen kann. Bei einer solchen Ausführung kann die Steuerungsvorrichtung aus dem Verlauf der ausgewählten Trajektorie eine zeitliche Abfolge von Ansteuersignalen für wenigstens einen die Rotation erzeugenden Antriebsmotor erzeugen und die Antriebsmotore entsprechend ansteuern, damit sich der Referenzpunkt bei dem Rotationsvorgang entlang der ausgewählten Trajektorie bewegt.

Hierbei können für die Antriebsmotore insbesondere Gleichstrommotore verwendet werden, die mit Sensoren ausgerüstet sind. Die Sensoren erlauben es jederzeit festzustellen, wie die kugelförmige Rotationsgussformhalterung ausgerichtet ist. Auf diese Weise kann mittels eines Regelkreises sichergestellt und überwacht werden, dass sich der Referenzpunkt entlang der Trajektorie bewegt. Alternativ oder zusätzlich ist es auch möglich, einen Ausrichtungssensor an der Rotationsgussform oder an der Rotationsgussformhalterung zu befestigen, der Daten hinsichtlich der jeweils aktuellen Ausrichtung, insbesondere per Funk, an die Steuerungsvorrichtung übermittelt. Auch auf diese Weise kann überwacht werden, ob sich der Referenzpunkt wie gewünscht während des Rotationsvorganges entlang der Trajektorie bewegt. Bei erfindungsgemäßen Rotationvorrichtungen, die nicht als Kugelrotationsvorrichtungen ausgebildet sind, gelten die obigen Ausführungen hinsichtlich der Ausgestaltung der Antriebsmotore mit Sensoren und hinsichtlich des Anordnens eines Ausrichtungssensors an der Rotationsgussform oder an der Rotationsgussformhalterung analog genauso.

Nach einem eigenständigen Erfindungsgedanken, der in Kombination oder auch losgelöst von dem Auswählen einer von mehreren Trajektorien realisiert sein kann, ist eine Rotationsgussanlage von ganz besonderem Vorteil, die eine Heizstation, mittels der eine Rotationsgussform beheizbar ist, und eine Kühlstation, in der eine Rotationsgussform, insbesondere aktiv, abkühlbar ist, beinhaltet, wobei die Heizstation vertikal über der Kühlstation angeordnet ist. Hierdurch wird insbesondere die Aufgabe gelöst, eine Rotationsgussanlage anzugeben, die besonders energieeffizient arbeitet.

Dadurch, dass die Heizstation vertikal über der Kühlstation angeordnet ist, kann eine Rotationsgussform durch eine Bewegung, die eine reine Vertikalbewegung ist, von der Kühlstation in die Heizstation und von der Heizstation in die Kühlstation überführt werden.

Die erfindungsgemäße Rotationsgussanlage hat den ganz besonderen Vorteil, dass die beim Abkühlen einer Rotationsgussform aufsteigende Wärme zumindest teilweise von der Heizstation genutzt wird. Insbesondere ermöglicht es die vorliegende Erfindung außerdem, eine Rotationsgussform von der Heizstation in die Kühlstation derart zu überführen und dort abzukühlen, ohne dass große Teil der in der Heizstation befindlichen Wärme entweichen kann, was weiter unten noch im Detail erläutert ist.

Bei einer vorteilhaften Ausführung steht die Heizstation auf der Kühlstation und wird insoweit von der Kühlstation vertikal abgestützt. Dies hat den besonderen Vorteil, dass die Heizstation innerhalb einer Werkhalle keine Standfläche für eigene Ständer benötigt.

Die Rotationsgussanlage kann vorteilhaft wenigstens einen Rotationsantrieb aufweisen, mittels dem eine Rotationsgussform (insbesondere gemeinsam mit einer Rotationsgusshalterung) zur Rotation angetrieben werden kann. Insbesondere kann vorteilhaft vorgesehen sein, dass eine Rotationsgussform in der Heizstation gleichzeitig beheizbar und mittels des Rotationsantriebs zur Rotation antreibbar ist und/oder dass eine Rotationsgussform in der Kühlstation gleichzeitig abkühlbar und mittels des Rotationsantriebs zur Rotation antreibbar ist.

Bei einer vorteilhaften Ausführung weist die Heizstation ein Heizstationgehäuse auf. Das Heizstationgehäuse ist vorzugsweise thermisch isolierend ausgebildet. Insbesondere kann vorteilhaft vorgesehen sein, dass das Heizstationgehäuse doppelwandig ausgebildet ist, wobei zwischen den Wandungen vorteilhaft ein thermisch isolierendes Material, beispielsweise Glaswolle oder Schaumglas oder wenigstens eine Vakuumisolationspaneele oder ein anders Isolationsmaterial, angeordnet sein kann.

Die Kühlstation kann ein Kühlstationgehäuse aufweisen. Insbesondere kann vorteilhaft zwischen dem Heizstationgehäuse und dem Kühlstationgehäuse eine thermische Isoliervorrichtung angeordnet sein. Die thermische Isoliervorrichtung kann beispielsweise spitz zulaufende Abstandhalter aufweisen, über die sich die auf der Kühlstation stehende Heizstation an der Kühlstation abstützt. Die thermische Isoliervorrichtung hat die Aufgabe, die Wärmeleitung von dem Heizstationgehäuse zu dem Kühlstationgehäuse zu verringern. Die thermische Isoliervorrichtung kann vorteilhaft insbesondere derart angeordnet sein, dass eine obere Öffnung des Kühlstationgehäuses und eine untere Öffnung des Heizstationgehäuses frei bleiben. Insbesondere kann die thermische Isoliervorrichtung umlaufend angrenzend an die unteren Kanten des Heizstationgehäuses und an die oberen Kanten des Kühlstationgehäuses angeordnet sein.

Bei einer ganz besonders vorteilhaften Ausführung weist das Heizstationgehäuse eine nach unten ausgerichtete Öffnung auf. Im Hinblick auf eine gute Wärmeisolierung kann vorteilhaft vorgesehen sein, dass die nach unten ausgerichtete Öffnung die einzige Öffnung des Heizstationgehäuses ist. Auf diese wird vorteilhaft erreicht, dass eine Rotationsgussform (insbesondere zusammen mit einer Rotationsgussformhalterung und/oder einer Rotationsvorrichtung) aus der Heizstation entnommen werden kann, weitgehend ohne dass große Teile der in der Heizstation befindlichen Wärme entweichen kann.

Das Kühlstationgehäuse kann vorteilhaft eine obere Öffnung aufweisen, die mit der nach unten ausgerichteten Öffnung des Heizstationgehäuse derart fluchtet, dass eine Rotationsgussform, insbesondere auf geradem vertikalem Weg, durch die obere Öffnung des Kühlstationgehäuses und die untere Öffnung des Heizstationgehäuses hindurch von dem Kühlstationgehäuse in das Heizstationgehäuse und/oder von dem Heizstationgehäuse in das Kühlstationgehäuse überführbar ist. Insbesondere kann die Rotationsgussanlage derart ausgebildet sein, dass eine Rotationsgussform zusammen mit einer Rotationsgussformhalterung und/oder einer Rotationsvorrichtung, insbesondere auf geradem vertikalem Weg, insbesondere auf kürzestem Weg, durch die obere Öffnung des Kühlstationgehäuses und die untere Öffnung des Heizstationgehäuses hindurch von dem Kühlstationgehäuse in das Heizstationgehäuse und/oder von dem Heizstationgehäuse in das Kühlstationgehäuse überführbar ist.

Bei einer ganz besonders vorteilhaften Ausführung ist ein Aufzug vorhanden, mittels dem eine Rotationsgussform oder eine Rotationsgussform samt einer Rotationsgussformhalterung, insbesondere motorisch und/oder pneumatisch und/oder hydraulisch angetrieben, aus der Kühlstation in die Heizstation und/oder aus der Heizstation in die Kühlstation überführbar ist. Insbesondere kann vorteilhaft vorgesehen sein, dass eine Rotationsgussform mittels des Aufzuges automatisch aus der Kühlstation in die Heizstation und/oder aus der Heizstation in die Kühlstation überführt wird, sobald vorgegebene oder vorgebbare Prozessparameter erreicht werden oder vorgegebene oder vorgebbare Prozesszeiten abgelaufen sind. Bei einer vorteilhaften Ausführung wird die Rotationsgussform mittels des Aufzuges automatisch nach Ablauf einer vorbestimmten oder vorbestimmbaren Heizzeit aus der Heizstation in die Kühlstation überführt.

Die Rotationsgussanlage kann in ganz besonders vorteilhafter Weise eine Rotationsvorrichtung aufweisen, die mittels des Aufzugs von dem Kühlstationgehäuse in das Heizstationgehäuse und/oder von dem Heizstationgehäuse in das Kühlstationgehäuse überführbar ist. Insbesondere kann die Rotationsvorrichtung eine Kugelrotationsvorrichtung sein, die eine Aufnahme für eine kugelförmige Rotationsgussformhalterung aufweist. Insbesondere kann vorteilhaft vorgesehen sein, dass die Rotationsgussformhalterung mittels eines Antriebsrades angetrieben wird, das auf der Oberfläche der kugelförmigen Rotationsgussformhalterung abrollt.

Bei einer ganz besonders vorteilhaften Ausführung weist die Rotationsvorrichtung eine Plattform auf, die die nach unten ausgerichtete Öffnung des Heizstationgehäuses verschließt, wenn sich die Rotationsvorrichtung in dem Heizstationgehäuse befindet. Insbesondere kann die Plattform an ihrem Umfangsrand eine umlaufende, hitzebeständige Dichtung, insbesondere eine Bürstendichtung, aufweisen.

Alternativ oder zusätzlich kann die Rotationsvorrichtung eine, insbesondere thermisch isolierende, Deckelplatte aufweisen, die nach unten ausgerichtete Öffnung des Heizstationgehäuses verschließt, wenn sich die Rotationsvorrichtung in dem Kühlstationgehäuse befindet. Insbesondere kann die Deckelplatte an ihrem Umfangsrand eine umlaufende, hitzebeständige Dichtung, insbesondere eine Bürstendichtung, aufweisen.

Bei einer anderen Ausführung bleibt die Antriebsvorrichtung (bis auf einen kleinen Teil des durch eine drehbar gelagerte Platte ragenden Antriebsrades) stets außerhalb der Heizstation. Beispielsweise kann vorteilhaft vorgesehen sein, dass das Antriebsrad durch einen Schlitz in einer runden Platte ragt, die drehbar gelagert ist und die stets zusammen mit dem Antriebsrad um eine vertikale Achse gedreht wird. Die Platte kann drehbar in einer Rahmenplatte gelagert sein. Es kann vorteilhaft vorgesehen sein, dass die Platte und die Rahmenplatte an der Bürstendichtung anliegend eine nach unten ausgerichtete Öffnung des Heizstationgehäuses verschließen, wenn sich die Rotationsgussformhalterung in der Heizstation befindet, während eine thermisch isolierende Deckelplatte an der Bürstendichtung anliegend die Öffnung des Heizstationgehäuses verschließt, wenn sich die Rotationsgussformhalterung in der Kühlstation befindet.

Die Rotationsgussformhalterung kann eine Vielzahl von Durchbrüchen aufweisen. Die Durchbrüche erlauben es, dass Heißluft und Kaltluft durch die Wandung der Rotationsgussformhalterung zu der Rotationsgussform gelangen kann, um es zu ermöglichen die in der Rotationsgussformhalterung angeordnete Rotationsgussform mittels Heißluft beheizen und mittels Kaltluft abkühlen zu können.

Bei einer besonderen Ausführung weist das Kühlstationgehäuse eine weitere, insbesondere seitliche, Öffnung auf, durch die hindurch eine Rotationsgussform oder eine, insbesondere kugelförmige, Rotationsgussformhalterung, in der eine Rotationsgussform gehaltert ist, in die Kühlstation hinein und nach einem Abkühlvorgang aus der Kühlstation hinaus befördert werden kann. Insbesondere kann ein Verschluss, insbesondere ein Schiebtor oder ein Rolltor oder eine Tür vorhanden sein, mit dem die weitere Öffnung verschlossen werden kann.

Bei einer ganz besonders vorteilhaften Ausführung weist die Kühlstation ein Kaltluftgebläse auf. Das Kaltluftgebläse kann in ganz besonders vorteilhafter Weise eine schlitzförmige Kaltluftdüse aufweisen. Insbesondere kann vorteilhaft vorgesehen sein, dass die Kaltluftdüse symmetrisch zu einer in der Kühlstation angeordneten Rotationsgussformhalterung und/oder Rotationsgussform ausgerichtet ist und/oder dass die Kaltluftdüse derart ausgerichtet ist, dass ein Kaltluftstrom symmetrisch zu einer in der Kühlstation angeordneten Rotationsgussformhalterung und/oder Rotationsgussform ausgerichtet ist. Auf diese Weise ist vorteilhaft gewährleistet, dass die Rotationsgussformhalterung und/oder die Rotationsgussform durch den Kaltluftstrom nicht zusätzlich zur Rotation angetrieben werden. Ein zusätzlicher Rotationsantrieb durch den Kaltluftstrom könnte nämlich nachteiliger weise dazu führen, dass eine vorgegebene Rotationstrajektorie nicht eingehalten wird.

Bei einer ganz besonders vorteilhaften Ausführung weist die Heizstation ein Heißluftgebläse auf. Das Heißluftgebläse kann in ganz besonders vorteilhafter Weise eine schlitzförmige Heißluftdüse aufweisen. Insbesondere kann vorteilhaft vorgesehen sein, dass die Heißluftdüse symmetrisch zu einer in der Heizstation angeordneten Rotationsgussformhalterung und/oder Rotationsgussform ausgerichtet ist und/oder dass die Heißluftdüse derart ausgerichtet ist, dass ein Heißluftstrom symmetrisch zu einer in der Heizstation angeordneten Rotationsgussformhalterung und/oder Rotationsgussform ausgerichtet ist. Auf diese Weise ist vorteilhaft gewährleistet, dass die Rotationsgussformhalterung und/oder die Rotationsgussform durch den Heißluftstrom nicht zusätzlich zur Rotation angetrieben werden. Ein zusätzlicher Rotationsantrieb durch den Heißluftstrom könnte nämlich nachteiliger weise dazu führen, dass eine vorgegebene Rotationstrajektorie nicht eingehalten wird.

Die Rotationsgussanlage kann vorteilhaft wenigstens eine Temperaturmessvorrichtung, insbesondere ein Pyrometer, aufweisen, mittels der die Temperatur einer in der Heizstation und/oder der Kühlstation angeordneten Rotationsgussform messbar ist. Mittels der Temperaturmessvorrichtung kann insbesondere überwacht werden, ob die Rotationsgussform während der unterschiedlichen Prozessschritte jeweils die erforderliche Temperatur aufweist. Insbesondere ist es möglich, den Aufheizvorgang und/oder den Abkühlvorgang, beispielsweis durch Regeln der Temperatur und/oder der Strömungsgeschwindigkeit eines Heißluftstromes bzw. Kaltluftstromes, zu steuern.

Von besonderem Vorteil ist ein Rotationsgusssystem, das eine erfindungsgemäße Rotationsgussanlage und wenigstens eine Rotationsgussform oder wenigstens eine Rotationsgussformhalterung, in der eine Rotationsgussform, angeordnet ist, aufweist.

Insbesondere ist (nach dem eigenständigen Erfindungsgedanken) eine Rotationsgussanlage mit wenigstens einem der folgenden Aspekte besonders vorteilhaft:
1. Rotationsgussanlage beinhaltend eine Heizstation, mittels der eine Rotationsgussform beheizbar ist, und eine Kühlstation, in der eine Rotationsgussform, insbesondere aktiv, abkühlbar ist, dadurch gekennzeichnet, dass die Heizstation vertikal über der Kühlstation angeordnet ist.
2. Rotationsgussanlage nach Aspekt 1, dadurch gekennzeichnet, dass die Heizstation auf der Kühlstation steht.
3. Rotationsgussanlage nach Aspekt 1 oder 2, dadurch gekennzeichnet, dass ein Rotationsantrieb vorhanden ist.
4. Rotationsgussanlage nach Aspekt 3, dadurch gekennzeichnet, dass eine Rotationsgussform in der Heizstation gleichzeitig beheizbar und mittels des Rotationsantriebs zur Rotation antreibbar ist.
5. Rotationsgussanlage nach Aspekt 3 oder 4, dadurch gekennzeichnet, dass eine Rotationsgussform in der Kühlstation gleichzeitig abkühlbar und mittels des Rotationsantriebs zur Rotation antreibbar ist.
6. Rotationsgussanlage nach einem der Aspekte 1 bis 5, dadurch gekennzeichnet, dass die Kühlstation ein Kühlstationgehäuse aufweist.
7. Rotationsgussanlage nach einem der Aspekte 1 bis 6, dadurch gekennzeichnet, dass und dass die Heizstation ein Heizstationgehäuse aufweist.
8. Rotationsgussanlage nach Aspekt 7, dadurch gekennzeichnet, dass das Heizstationgehäuse thermisch isolierend ausgebildet ist und/oder dass das Heizstationgehäuse wenigstens teilweise aus einem thermisch isolierenden Material ausgebildet ist.
9. Rotationsgussanlage nach Aspekt 6 und 7, dadurch gekennzeichnet, dass zwischen dem Heizstationgehäuse und dem Kühlstationgehäuse eine thermische Isoliervorrichtung angeordnet ist.
10. Rotationsgussanlage nach Aspekt 9, dadurch gekennzeichnet, dass die Isoliervorrichtung spitz zulaufende Abstandhalter aufweist.
11. Rotationsgussanlage nach Aspekt 10, dadurch gekennzeichnet, dass sich die Heizstation über die Abstandhalter, insbesondere ausschließlich über die Abstandhalter, an der Kühlstation abstützt.
12. Rotationsgussanlage nach einem der Aspekte 1 bis 11, dadurch gekennzeichnet, dass das Heizstationgehäuse eine nach unten ausgerichtete Öffnung aufweist.
13. Rotationsgussanlage nach Aspekt 12, dadurch gekennzeichnet, dass die nach unten ausgerichtete Öffnung die einzige Öffnung des Heizstationgehäuses ist.
14. Rotationsgussanlage nach Aspekt 12 oder 13, dadurch gekennzeichnet, dass das Kühlstationgehäuse eine obere Öffnung aufweist, die mit der nach unten ausgerichteten Öffnung des Heizstationgehäuse derart fluchtet, dass eine Rotationsgussform, insbesondere auf geradem vertikalem Weg, durch die obere Öffnung des Kühlstationgehäuses und die untere Öffnung des Heizstationgehäuses hindurch von dem Kühlstationgehäuse in das Heizstationgehäuse und/oder von dem Heizstationgehäuse in das Kühlstationgehäuse überführbar ist.
15. Rotationsgussanlage nach einem der Aspekte 1 bis 14, dadurch gekennzeichnet, dass ein Aufzug vorhanden ist, mittels dem eine Rotationsgussform oder eine Rotationsgussform samt einer Rotationsgussformhalterung aus der Kühlstation in die Heizstation und/oder aus der Heizstation in die Kühlstation überführbar ist.
16. Rotationsgussanlage nach Aspekt 15, dadurch gekennzeichnet, dass die Rotationsgussanlage eine Rotationsvorrichtung aufweist, die mittels des Aufzugs von dem Kühlstationgehäuse in das Heizstationgehäuse und/oder von dem Heizstationgehäuse in das Kühlstationgehäuse überführbar ist.
17. Rotationsgussanlage nach Aspekt 16, dadurch gekennzeichnet, dass die Rotationsvorrichtung eine Kugelrotationsvorrichtung ist, die eine Aufnahme für eine kugelförmige Rotationsgussformhalterung aufweist.
18. Rotationsgussanlage nach Aspekt 17, dadurch gekennzeichnet, dass die Rotationsgussformhalterung mittels eines Antriebsrades angetrieben wird, das auf der Oberfläche der kugelförmigen Rotationsgussformhalterung abrollt.
19. Rotationsgussanlage nach Aspekt 17 oder 18, dadurch gekennzeichnet, dass die Rotationsgussformhalterung eine Vielzahl von Durchbrüchen aufweist.
20. Rotationsgussanlage nach einem der Aspekte 17 bis 19, dadurch gekennzeichnet, dass Kühlstationgehäuse eine weitere, insbesondere seitliche, Öffnung aufweist, durch die hindurch eine als Kugel ausgebildete Rotationsgussformhalterung in die Kühlstation hinein und nach einem Abkühlvorgang aus der Kühlstation hinaus befördert werden kann.
21. Rotationsgussanlage nach Aspekt 20, dadurch gekennzeichnet, dass ein Verschluss, insbesondere ein Schiebtor oder ein Rolltor oder eine Tür vorhanden ist, für die weitere Öffnung vorhanden ist.
22. Rotationsgussanlage nach einem der Aspekte 1 bis 21, dadurch gekennzeichnet, dass die Kühlstation ein Kaltluftgebläse aufweist.
23. Rotationsgussanlage nach Aspekt 22, dadurch gekennzeichnet, dass das Kaltluftgebläse eine schlitzförmige Düse aufweist.
24. Rotationsgussanlage nach Aspekt 22 oder 23, dadurch gekennzeichnet, dass die Düse symmetrisch zu einer in der Kühlstation angeordneten Rotationsgussformhalterung und/oder Rotationsgussform ausgerichtet ist und/oder dass die Düse derart ausgerichtet ist, dass ein Kaltluftstrom symmetrisch zu einer in der Kühlstation angeordneten Rotationsgussformhalterung und/oder Rotationsgussform ausgerichtet ist.
25. Rotationsgussanlage nach einem der Aspekte 1 bis 24, dadurch gekennzeichnet, dass die Heizstation ein Heißluftgebläse aufweist.
26. Rotationsgussanlage nach Aspekt 25, dadurch gekennzeichnet, dass das Heißluftgebläse eine schlitzförmige Düse aufweist.
27. Rotationsgussanlage nach Aspekt 25 oder 26, dadurch gekennzeichnet, dass die Düse symmetrisch zu einer in der Heizstation angeordneten Rotationsgussformhalterung und/oder Rotationsgussform ausgerichtet ist und/oder dass die Düse derart ausgerichtet ist, dass ein Heißluftstrom symmetrisch zu einer in der Heizstation angeordneten Rotationsgussformhalterung und/oder Rotationsgussform ausgerichtet ist.
28. Rotationsgussanlage nach einem der Aspekte 1 bis 27, dadurch gekennzeichnet, dass die Rotationsgussanlage wenigstens eine Temperaturmessvorrichtung, insbesondere ein Pyrometer, aufweist, mittels der die Temperatur einer in der Heizstation und/oder der Kühlstation angeordneten Rotationsgussform messbar ist.
29. Rotationsgusssystem beinhaltend eine Rotationsgussanlage nach einem der Aspekte 1 bis 28 und beinhaltend wenigstens eine Rotationsgussform oder wenigstens eine Rotationsgussformhalterung, in der eine Rotationsgussform, angeordnet ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel einer erfindungsgemäßen Rotationsgussvorrichtung,
- Fig. 2: ein Ausführungsbeispiel einer Eingabevorrichtung einer erfindungsgemäßen Rotationsgussvorrichtung,
- Fig. 3: ein anderes Ausführungsbeispiel einer Eingabevorrichtung einer erfindungsgemäßen Rotationsgussvorrichtung,
- Fig. 4: ein Ausführungsbeispiel einer erfindungsgemäßen Rotationsgussanlage nach einem eigenständigen Erfindungsgedanken,
- Fig. 5: das Ausführungsbeispiel nachdem eine kugelförmige Rotationsgussformhalterung samt einer darin gehaltenen Rotationsgussform eingebracht wurde,
- Fig. 6: das Ausführungsbeispiel der Rotationsgussanlage nachdem die gesamte Rotationvorrichtung vertikal nach oben in die Heizstation verbracht wurde,
- Fig. 7: das Ausführungsbeispiel der Rotationsgussanlage nachdem die Rotationvorrichtung zurück in die Kühlstation verbracht wurde,
- Fig. 8: ein weiteres Ausführungsbeispiel einer erfindungsgemäßen Rotationsgussanlage nach dem eigenständigen Erfindungsgedanken,
- Fig. 9: das weitere Ausführungsbeispiel nachdem eine kugelförmige Rotationsgussformhalterung samt einer darin gehaltenen Rotationsgussform eingebracht wurde,
- Fig. 10: das weitere Ausführungsbeispiel der Rotationsgussanlage nachdem die gesamte Rotationvorrichtung vertikal nach oben in die Heizstation verbracht wurde,
- Fig. 11: das weitere Ausführungsbeispiel der Rotationsgussanlage nachdem die Rotationvorrichtung zurück in die Kühlstation verbracht wurde.

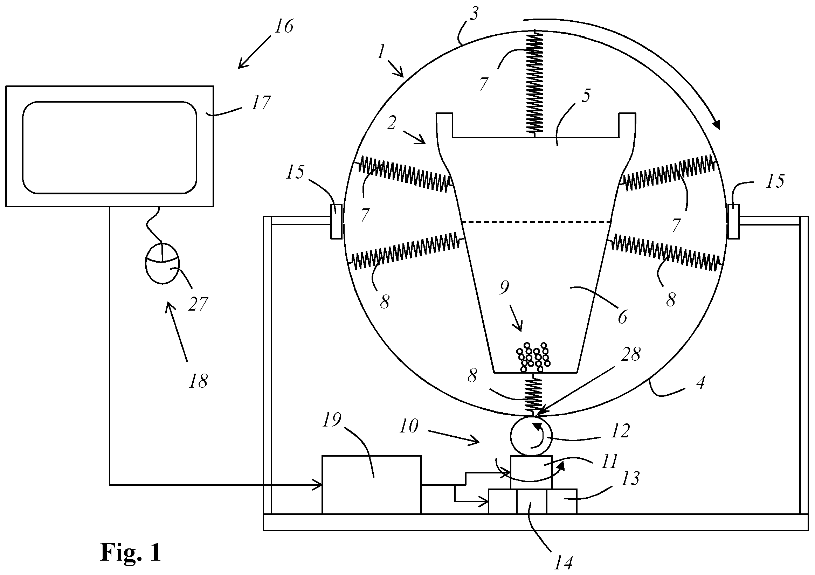

Figur 1 zeigt ein Ausführungsbeispiel einer erfindungsgemäßen Rotationsgussvorrichtung, die eine Rotationsgussformhalterung 1 und eine Rotationsgussform 2 aufweist. Die Rotationsgussformhalterung 1 ist als Kugel ausgebildet, die bei einem Rotationsvorgang zur Rotation angetrieben wird. Die Rotationsgussform 2 ist in dem gezeigten Beispiel zur Herstellung eines Pflanzengefäßes ausgebildet. Es gibt hinsichtlich der Art des herzustellenden Gegenstandes jedoch keine grundsätzlichen Beschränkungen.

Die Rotationsgussformhalterung 1 besteht aus einer ersten Halbkugel 3 und einer zweiten Halbkugel 4, die lösbar miteinander verbunden werden können.

Die Rotationsgussform 2 ist ebenfalls zweiteilig aufgebaut und weist ein erstes Rotationsgussformteil 5 und ein zweites Rotationsgussformteil 6 auf. Das erste Rotationsgussformteil 5 ist mittels erster Federn 7 innen an der ersten Halbkugel 3 befestigt, während das zweite Rotationsgussformteil 6 mittels zweiter Federn 8 innen an der zweiten Halbkugel 4 befestigt ist. Die erste Halbkugel 3 kann samt dem ersten Rotationsgussformteil 5 von der zweiten Halbkugel 4 samt dem zweiten Rotationsgussformteil 6 abgehoben werden, um Rotationsgussmaterial 9 vor einem Rotationsvorgang in die Rotationsgussform 2 einbringen zu können und um nach einem Rotationsvorgang das hergestellte Produkt entnehmen zu können.

Nach dem Einbringen des Rotationsgussmaterials 9 wird das erste Rotationsgussformteil 5 auf das zweite Rotationsgussformteil 6 aufgesetzt und damit die Rotationsgussformhalterung 1 geschlossen. Anschließend kann der Rotationsvorgang beginnen. Bei dem Rotationsvorgang wird die Rotationsgussform 2 rotiert und gleichzeitig beheizt, damit das zuvor eingefüllte Rotationsgussmaterial 9 aufschmelzen und sich an der Innenseite der Rotationsgussform 2 anlagern kann.

Die Rotationsgussformhalterung 1 wird mittels einer Antriebsvorrichtung 10 zur Rotation angetrieben. Die Antriebsvorrichtung 10 beinhaltet einen Antriebsmotor 11, der ein Antriebsrad 12 um eine horizontale Achse zur Rotation antreibt. Das Antriebsrad 12 steht in Reibungskontakt mit der Außenseite der Rotationsgussformhalterung 1 und treibt diese samt der darin gehaltenen Rotationsgussform 2 zur Rotation an.

Die gesamte Antriebsvorrichtung 10 kann mit einer weiteren Antriebsvorrichtung 13, die einen zweiten Antriebsmotor 14 aufweist, um eine vertikale Achse gedreht werden, um die Ausrichtung der horizontalen Rotationsachse, um die das Antriebsrad 12 rotiert, ändern zu können. Bei einer Änderung der Ausrichtung der horizontalen Rotationsachse, um die das Antriebsrad 12 rotiert, ändert sich automatisch auch die Ausrichtung der Rotationsachse, um die die Rotationsgussform 2 rotiert.

Die Rotationsgussformhalterung 1 wird mittels seitlich angeordneter Schleifplatten 15 während ihrer Rotation in Position gehalten. Die Rotationsgussformhalterung 1 bleibt während des Rotationsvorganges ortsfest.

Die Rotationsgussvorrichtung 1 weist eine Eingabevorrichtung 16 auf. Die Eingabevorrichtung 16 umfasst eine Anzeigevorrichtung 17 und ein Eingabegerät 18, das als Computermaus 27 ausgebildet ist. Mittels der Eingabevorrichtung 16 kann eine Trajektorie 25 eines Referenzpunktes 28 der Rotationsgussformhalterung 1 oder der Rotationsgussform 2 für einen Rotationsvorgang aus mehreren möglichen mit der Rotationsgussvorrichtung 1 ausführbaren Trajektorien ausgewählt werden.

Die Steuerungsvorrichtung 19 steuert die Antriebsvorrichtung 10 und die weitere Antriebsvorrichtung 13 bei einem Rotationsvorgang derart, dass sich der Referenzpunkt 28 entlang einer ausgewählten Trajektorie 25 bewegt. Hierzu erzeugt die Steuerungsvorrichtung 19 aus dem Verlauf der Trajektorie 25 eine zeitliche Abfolge von Ansteuersignalen für die Antriebsvorrichtung 10 und die weitere Antriebsvorrichtung 13. Der Referenzpunkt 28 kann (wie in diesem Ausführungsbeispiel) beispielsweise der Punkt auf der Außenseite der Rotationsgussformhalterung 1 sein, der sich zu Beginn des Rotationsvorganges ganz unten und in Kontakt mit dem Antriebsrad 12 befindet. Die Trajektorie verläuft ausschließlich auf einer Kugelfläche, nämlich der Kugelfläche, die der Außenseite der Rotationsgussformhalterung 1 entspricht.

Es ist wichtig, dass die Rotationsgussformhalterung 1 zu Beginn des Rotationsvorganges so ausgerichtet ist, dass sich der Referenzpunkt 28 am Anfang der ausgewählten Trajektorie 25 befindet. Außerdem ist es wichtig, dass die Steuerungsvorrichtung 19 zu Beginn des Rotationsvorganges die genaue Rotationsausrichtung der Rotationsgussformhalterung 1 bekannt ist. Hierzu können vorteilhaft Sensoren an der Antriebsvorrichtung 10 und/oder der weiteren Antriebsvorrichtung 13 und/oder Ausrichtungssensoren an der Rotationsgussformhalterung 1 oder der Rotationsgussvorm 2 vorhanden sein, die der Steuerungsvorrichtung 19 Informationen über die jeweils aktuelle Ausrichtung der Rotationsgussformhalterung 1 übergeben.

Insbesondere kann vorteilhaft vorgesehen sein, dass Trajektoriensegmente eingegeben können und an eine Steuerungsvorrichtung 19 übermittelt werden können, wobei die Steuerungsvorrichtung 19 aus den eingegebenen Trajektoriensegmenten die Trajektorie 25 durch Aneinanderreihen der eingegebenen Trajektoriensegmente 22, 23, 24 festlegt.

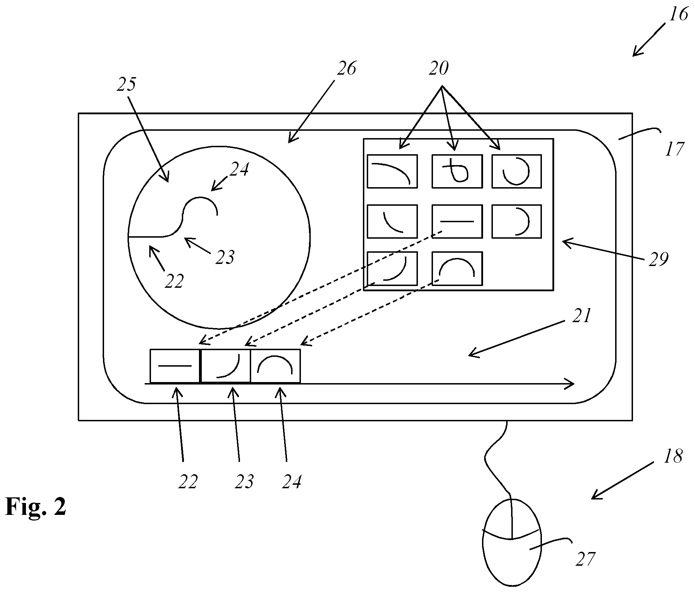

Figur 2 zeigt ein Ausführungsbeispiel einer Eingabevorrichtung 16 einer erfindungsgemäßen Rotationsgussvorrichtung. Die Eingabevorrichtung 16 weist eine Anzeigevorrichtung 17 in Form eines Monitors auf. Außerdem weist die Eingabevorrichtung 16 ein Eingabegerät 18 in Form einer Computermaus 27 auf.

Die Anzeigevorrichtung 17 zeigt dem Benutzer eine Auswahldarstellung 29 unterschiedlicher Trajektoriensegmenttypen 20 an, aus der der Benutzer nacheinander einzelne Trajektoriensegmente 22, 23, 24 mittels des Eingabegerätes 18 auswählen und auf einem Zeitstrahl 21 anordnen kann. Das Anordnen der einzelnen Trajektoriensegmente 22, 23, 24 geschieht dadurch, dass der Benutzer mit dem als Computermaus 27 ausgebildeten Eingabegerät 18 jeweils einen der Trajektoriensegmenttypen 20 anklickt und den angeklickte Trajektoriensegmenttypen bei gedrückter Maustaste zu der Zeitstrahl 21 schiebt, wodurch das Symbol dupliziert und das Duplikat auf der Zeitstrahl 21 abgelegt wird. Dieser Vorgang ist in der Figur 2 symbolisch durch die gestrichelten Pfeile angedeutet.

Aus der Aneinanderreihung der Trajektoriensegmente 22, 23, 24 ergibt sich die Trajektorie 25, entlang der sich der Referenzpunkt 28 bei einem Rotationsvorgang bewegt.

Die Anzeigevorrichtung 17 zeigt dem Benutzer außerdem eine Voransichtsdarstellung 26 an, in der die Oberfläche der Rotationsgussformhalterung 1 zweidimensional dargestellt ist. Außerdem wird die aus den Trajektoriensegmenten 22, 23, 24 zusammengesetzte Trajektorie 25 dem Benutzer in der Voransichtsdarstellung 26 angezeigt.

Der Benutzer hat die Möglichkeit, zusätzlich zu jedem Trajektoriensegment 22, 23, 24 einen Parameter aus der Gruppe Trajektoriensegmentlänge, Trajektoriensegmentkrümmung und Trajektoriensegmentkrümmungsverlauf einzugeben. Außerdem hat der Benutzer die Möglichkeit, jedem Trajektoriensegment 22, 23, 24 eine Geschwindigkeit oder einen Geschwindigkeitsverlauf zuzuordnen. Die Geschwindigkeit beziehungsweise der Geschwindigkeitsverlauf gibt an, mit welcher Dynamik sich der Referenzpunkt 28 bei einem Rotationsvorgang entlang dem jeweiligen Trajektoriensegment 22, 23, 24 bewegt.

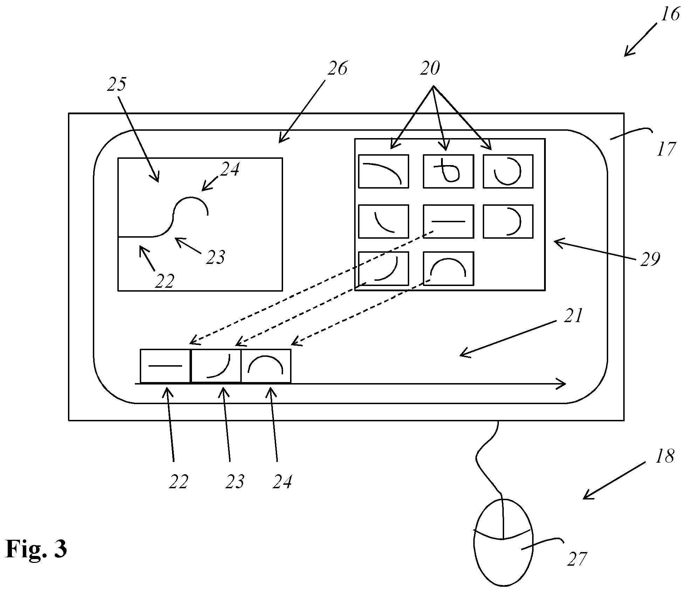

Figur 3 zeigt ein anderes Ausführungsbeispiel einer Anzeigevorrichtung 17 einer erfindungsgemäßen Rotationsgussvorrichtung. Die in Figur 3 gezeigte Anzeigevorrichtung unterscheidet sich von der in Figur 2 dargestellten Ausführung durch die Voransichtsdarstellung 26. Die Voransichtsdarstellung 26 ist eine Mercator-Projektion der Kugeloberfläche der Rotationsgussformhalterung 1 in eine Ebene, ähnlich wie bei der Projektion einer Satellitenbahn auf eine zweidimensionale Weltkarte.

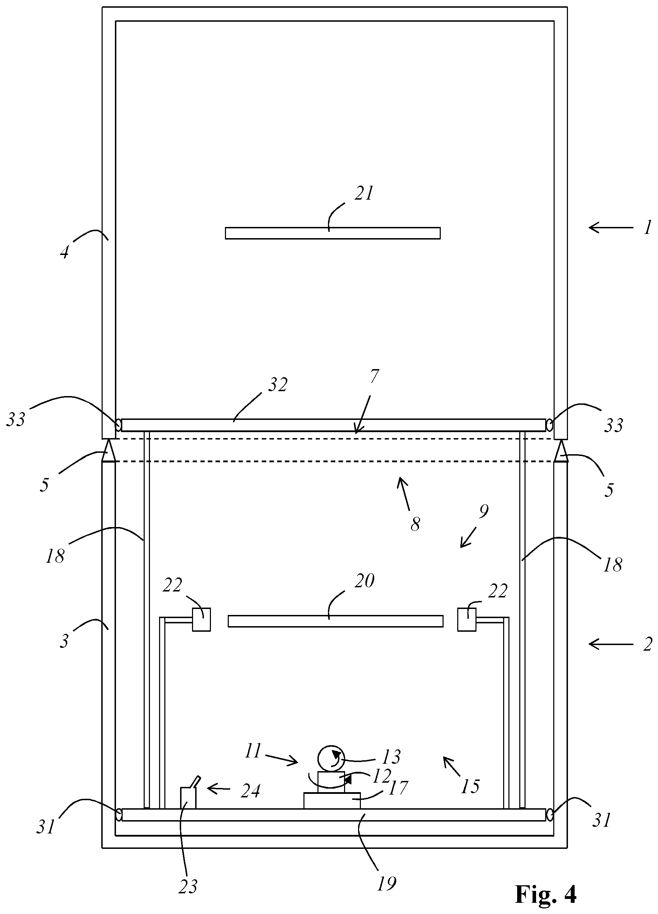

Da die Figuren 4 bis 11 einen eigenständigen Erfindungsgedanken betreffen, der auch in Kombination oder auch losgelöst von den in den Figuren 1 bis 3 dargestellten Ausführungsbeispielen realisiert sein kann, wurden eigene Bezugszeichen wie folgt angegeben verwendet:
- 1: Heizstation
- 2: Kühlstation
- 3: Kühlstationgehäuse
- 4: Heizstationgehäuse
- 5: Isoliervorrichtung
- 6: Abstandhalter
- 7: nach unten ausgerichtete Öffnung des Heizstationgehäuses 4
- 8: obere Öffnung des Kühlstationgehäuses
- 9: Rotationsvorrichtung
- 10: Rotationsgussmaterial
- 11: Rotationsantrieb
- 12: erster Antriebsmotor
- 13: Antriebsrad
- 14: Rotationsgussformhalterung
- 15: Aufnahme
- 16: Rotationsgussform
- 17: zweiter Antriebsmotor
- 18: Vertikalträger
- 19: Plattform
- 20: Kaltluftdüse
- 21: Heißluftdüse
- 22: Schleifplatte
- 23: Pyrometer
- 24: Temperaturmessvorrichtung
- 25: erste Halbkugel
- 26: zweite Halbkugel
- 27: erstes Rotationsgussformteil
- 28: zweites Rotationsgussformteil
- 29: erste Federn
- 30: zweite Federn
- 31: erste Bürstendichtung
- 32: Deckelplatte
- 33: zweite Bürstendichtung
- 34: Bürstendichtung
- 35: Drehbar gelagerte Platte
- 36: Rahmenplatte

Figur 4 zeigt ein Ausführungsbeispiel einer erfindungsgemäßen Rotationsgussanlage, die einer Heizstation 1 und eine Kühlstation 2 aufweist. Die Heizstation 1 ist vertikal über der Kühlstation 2 angeordnet.

Die Kühlstation 2 weist ein Kühlstationgehäuse 3 und die Heizstation 1 ein Heizstationgehäuse 4 auf. Das Heizstationgehäuse 4 ist thermisch isolierend ausgebildet. Insbesondere kann vorteilhaft vorgesehen sein, dass das Heizstationgehäuse 4 doppelwandig ausgebildet ist, wobei zwischen den Wandungen vorteilhaft ein thermisch isolierendes Material, beispielsweise Glaswolle oder Schaumglas oder wenigstens eine Vakuumisolationspaneele oder ein anders Isolationsmaterial, angeordnet sein kann.

Zwischen dem Heizstationgehäuse 4 und dem Kühlstationgehäuse 3 ist eine thermische Isoliervorrichtung 5 angeordnet. Die thermische Isoliervorrichtung 5 beinhaltet spitz zulaufende Abstandhalter 6, über die sich die auf der Kühlstation 2 stehende Heizstation 1 abstützt. Die thermische Isoliervorrichtung 5 ist umlaufend angrenzend an die vier unteren Kanten des Heizstationgehäuses 4 und an die vier oberen Kanten des Kühlstationgehäuses 3 angeordnet. Die thermische Isoliervorrichtung 5 verringert die Wärmeleitung von dem Heizstationgehäuse 4 zu dem Kühlstationgehäuse 3.

Die Rotationsgussanlage weist eine Rotationsvorrichtung 9 mit einem Rotationsantrieb 11 auf. Der Rotationsantrieb 11 beinhaltet einen ersten Antriebsmotor 12, der ein Antriebsrad 13 um eine horizontale Achse zur Rotation antreibt. Das Antriebsrad 13 ist dazu ausgebildet, in Reibungskontakt mit der Außenseite einer (in dieser Figur nicht dargestellten) Rotationsgussformhalterung 14 zu stehen, die in eine Aufnahme 15 der Rotationsvorrichtung 9 einfügbar ist.

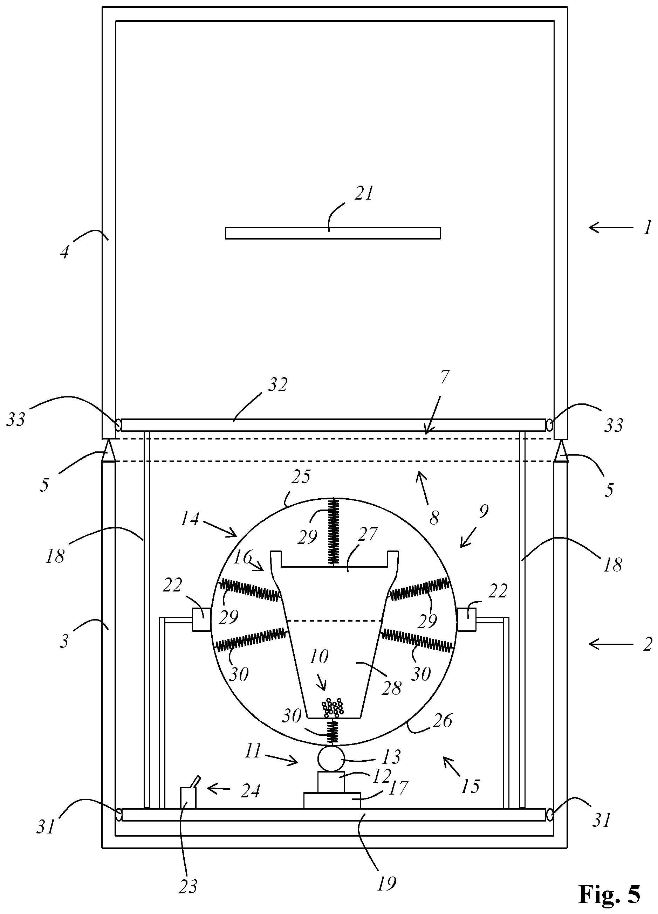

In die Aufnahme 15 kann eine kugelförmige Rotationsgusshalterung 14, in der eine Rotationsgussform 16 gehalten ist, angeordnet und zur Rotation angetrieben werden. Dies ist in den Figuren 5, 6 und 7 dargestellt. Die Aufnahme 15 weist seitlich angeordnete Schleifplatten 22 auf, die eine Rotationsgussformhalterung 14 während des Rotationsvorganges in Position halten.

Das Antriebsrad 13 kann samt dem ersten Antriebsmotor 12 mittels eines zweiten Antriebsmotors 17 um eine vertikale Achse gedreht werden, um die Ausrichtung der horizontalen Rotationsachse, um die das Antriebsrad 13 rotiert, ändern zu können. Bei einer Änderung der Ausrichtung der horizontalen Rotationsachse, um die das Antriebsrad 13 rotiert, ändert sich automatisch auch die Ausrichtung der Rotationsachse, um die die Rotationsgussform 14 samt der darin gehaltenen Rotationsgussform 16 rotiert.

Das Heizstationgehäuse 4 weist eine nach unten ausgerichtete Öffnung 7 und das Kühlstationgehäuse 3 eine nach oben ausgerichtete Öffnung 8 auf. Die obere Öffnung 8 des Kühlstationgehäuses 3 fluchtet mit der nach unten ausgerichteten Öffnung 7 des Heizstationgehäuses 4 derart, dass die gesamte Rotationsvorrichtung 9 samt einer in der Aufnahme 15 befindlichen Rotationsgussformhalterung 14 vertikal von der Kühlstation 2 in die Heizstation 1 und umgekehrt von der Heizstation 1 zurück in die Kühlstation 2 überführt werden kann. Zu diesem Zweck ist ein Aufzug mit (nicht dargestellten) Führungsschienen vorhanden. An den (nicht dargestellten) Führungsschienen ist eine Plattform 19 der Rotationsvorrichtung 9 motorisch angetrieben verschiebbar gelagert.

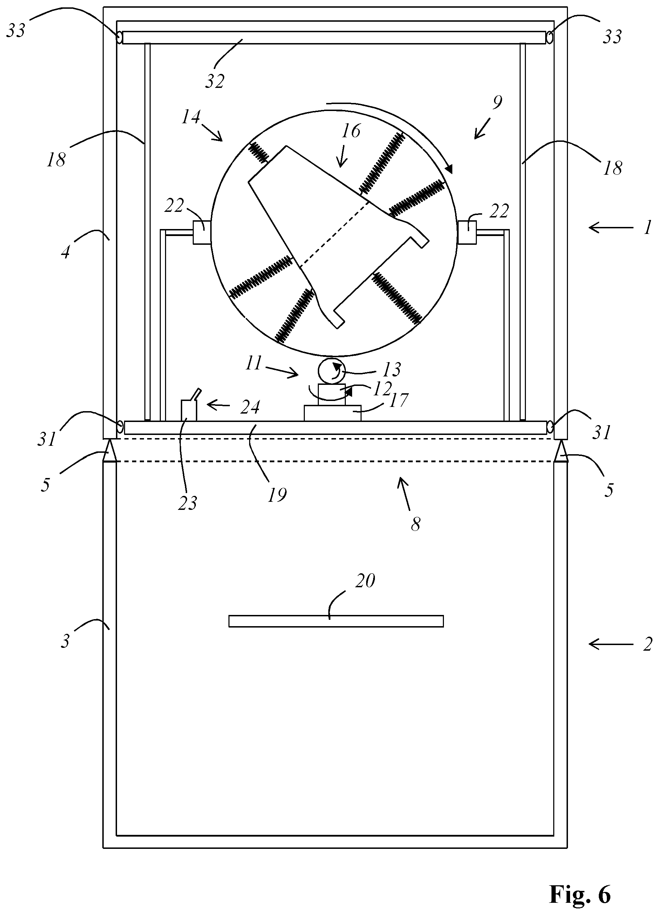

Die Plattform 19 weist entlang ihrem äußeren Umfangsrand eine erste Bürstendichtung 31 auf, die erste Bürstendichtung 31 steht in Kontakt zu der Innenseite des Kühlstationgehäuses 3, solange sich der Aufzug in der unteren Position befindet (Figuren 4, 5 und 7) und in Kontakt zu der Innenseite des Heizstationgehäuses 4, wenn sich der Aufzug in der oberen Position befindet (Figur 6). Die Plattform 19 verschließt die nach unten ausgerichtete Öffnung 7 des Heizstationgehäuses 4, wenn sich der Aufzug in der oberen Position befindet (Figur 6).

Die Plattform 19 trägt vier Vertikalträger 18, die ihrerseits eine thermisch isolierende Deckelplatte 32, die parallel zu der Plattform 19 angeordnet ist, tragen. Die Deckelplatte 32 weist entlang ihrem äußeren Umfangsrand eine zweite Bürstendichtung 33 auf, die in Kontakt zu der Innenseite des Heizstationgehäuses 4 steht. Die Deckelplatte 32 verschließt die nach unten ausgerichtete Öffnung 7 des Heizstationgehäuses 4, wenn sich der Aufzug in der unteren Position befindet (Figuren 4, 5 und 7).

Die Kühlstation 2 weist ein (nicht näher dargestelltes) Kaltluftgebläse mit einer schlitzförmigen Kaltluftdüse 20 auf. Die Kaltluftdüse 20 ist derart ausgerichtet und angeordnet, dass der durch sie hindurch strömende Kaltluftstrom symmetrisch zu einer in der Kühlstation 2 angeordneten Rotationsgussformhalterung 14 ausgerichtet ist. Konkret ist die Kaltluftdüse 20 derart ausgerichtet, dass der Kaltluftstrom ein einer Äquatorebene auf die kugelförmige Rotationsgussformhalterung 14 trifft. Auf diese Weise ist vorteilhaft gewährleistet, dass die kugelförmige Rotationsgussformhalterung 14 durch den Kaltluftstrom nicht zusätzlich zur Rotation angetrieben wird.

Die Heizstation 1 weist ein (nicht näher dargestelltes) Heißluftgebläse auf, das eine schlitzförmige Heißluftdüse 21 beinhaltet. Die Heißluftdüse 21 ist derart ausgerichtet und angeordnet, dass der durch sie hindurch strömende Heißluftstrom symmetrisch zu einer in der Heizstation 1 angeordneten Rotationsgussformhalterung 14 ausgerichtet ist. Konkret ist die Heißluftdüse 21 derart ausgerichtet, dass der Heißluftstrom ein einer Äquatorebene auf die kugelförmige Rotationsgussformhalterung 14 trifft. Auf diese Weise ist vorteilhaft gewährleistet, dass die kugelförmige Rotationsgussformhalterung 14 durch den Heißluftstrom nicht zusätzlich zur Rotation angetrieben wird.

Es ist eine als Pyrometer 23 ausgebildete Temperaturmessvorrichtung 24 vorhanden, mittels der die Temperatur der Rotationsgussform 16 messbar ist.

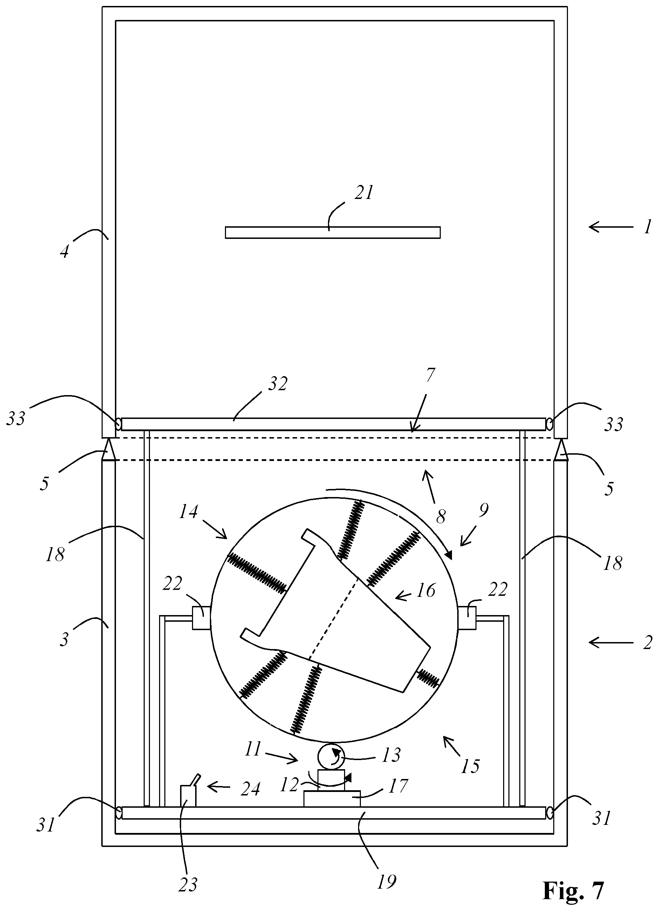

Die Figur 7 zeigt das Ausführungsbeispiel der erfindungsgemäßen Rotationsgussanlage in einer Situation, in der die Rotationsgussanlage bereit ist, eine kugelförmige Rotationsgussformhalterung 14 mit einer darin gehaltenen Rotationsgussform 16 zu empfangen. Die kugelförmige Rotationsgussformhalterung 14 kann durch eine (nicht mehr dargestellte) seitliche Öffnung des Kühlstationgehäuses 2 horizontal in die Aufnahme 15 gebracht werden.

Vor dem Einfügen einer Rotationsgussformhalterung 14 mit einer darin gehaltenen Rotationsgussform 16 in die Aufnahme 15 ist es notwendig, die Rotationsgussform 16 mit Rotationsgussmaterial 10 zu beschicken. Bei dem dargestellten Ausführungsbeispiel ist die Rotationsgussform 16 zur Herstellung eines Pflanzengefäßes ausgebildet. Es gibt hinsichtlich der Art des herzustellenden Gegenstandes jedoch keine grundsätzlichen Beschränkungen.

Die kugelförmige Rotationsgussformhalterung 14 besteht aus einer ersten Halbkugel 25 und einer zweiten Halbkugel 26, die lösbar miteinander verbunden werden können. Die Rotationsgussform 16 ist ebenfalls zweiteilig aufgebaut und weist ein erstes Rotationsgussformteil 27 und ein zweites Rotationsgussformteil 28 auf. Das erste Rotationsgussformteil 27 ist mittels erster Federn 29 innen an der ersten Halbkugel 25 befestigt, während das zweite Rotationsgussformteil 28 mittels zweiter Federn 30 innen an der zweiten Halbkugel 26 befestigt ist. Die erste Halbkugel 25 kann samt dem ersten Rotationsgussformteil 27 von der zweiten Halbkugel 26 samt dem zweiten Rotationsgussformteil 28 abgehoben werden, um Rotationsgussmaterial 10 vor einem Rotationsvorgang in die Rotationsgussform 16 einbringen zu können und um nach einem Rotationsvorgang das hergestellte Produkt entnehmen zu können.

Nach dem Einbringen des Rotationsgussmaterials 10 wird das erste Rotationsgussformteil 27 auf das zweite Rotationsgussformteil 28 aufgesetzt und damit die Rotationsgussformhalterung 16 geschlossen. Anschließend kann die Rotationsgussformhalterung 14 mit einer darin gehaltenen Rotationsgussform 16 durch eine seitliche Öffnung der Kühlstation 2 in die Aufnahme 15 der Rotationsvorrichtung 9 gebracht werden.

Figur 5 zeigt das Ausführungsbeispiel der Rotationsgussanlage, nachdem eine kugelförmige Rotationsgussformhalterung 14 samt einer darin gehaltenen Rotationsgussform 16 in die Aufnahme 15 eingebracht wurde. Anschließend wird die gesamte Rotationsvorrichtung 9 samt der in der Aufnahme befindlichen Rotationsgussformhalterung 14 und der Rotationsgussform 16 mittels des Aufzuges vertikal nach oben in die Heizstation 1 überführt.

Figur 6 zeigt die Situation, nachdem die gesamte Rotationvorrichtung samt der Rotationsgussformhalterung 14 und der Rotationsgussform 16 mittels des Aufzugs vertikal nach oben in die Heizstation 1 verbracht wurde.

In der Heizstation 1 wird die Rotationsgussform 16 mittels des Heißluftgebläses beheizt. Die Rotationsgussformhalterung 14 weist eine Vielzahl von Durchbrüchen auf, durch die der Heißluftstrom, der durch die Heißluftdüse 21 ausgeblasen wird, auf die Rotationsgussform 16 trifft. Die Rotationsgussform 16 wird gleichzeitig rotiert und beheizt, damit das zuvor eingefüllte Rotationsgussmaterial 10 aufschmelzen und sich an der Innenseite an der Rotationsgussform 16 anlagern kann. Es Die Rotationsgussformhalterung 14 wird hierbei mittels der seitlich angeordneten Schleifplatten 22 während ihrer Rotation in Position gehalten. Die Rotationsgussformhalterung 14 bleibt während des Rotationsvorganges innerhalb der Heizstation 1 ortsfest.

Nachdem sich das gesamte Rotationsgussmaterial 10 an die Innenwandung der Rotationsgussform 16 angelagert hat, wird die gesamte Rotationsvorrichtung 9 samt der in der Aufnahme 15 befindlichen Rotationsgussformhalterung 14 und der Rotationsgussform 16 mittels des Aufzuges vertikal nach unten in die Kühlstation 2 überführt. Hierbei wird die Rotationsgussformhalterung 14 samt der Rotationsgussform 16 weiter rotiert.

Figur 7 zeigt die Situation, nachdem die gesamte Rotationvorrichtung samt der Rotationsgussformhalterung 14 und der Rotationsgussform 16 mittels des Aufzugs vertikal nach unten zurück in die Kühlstation 2 verbracht wurde.

In der Kühlstation 2 wird die Rotationsgussform 16 aktiv mittels des Kaltluftgebläses gekühlt, während die Antriebsvorrichtung die kugelförmige Rotationsgussformhalterung 14 ununterbrochen zur Rotation antreibt.

Sobald mittels der Temperaturmessvorrichtung 24 festgestellt wurde, dass die Rotationsgussform 16 ausreichend abgekühlt ist, kann die kugelförmige Rotationsgussformhalterung 14 samt der Rotationsgussform 16 durch die (nicht dargestellte) seitliche Öffnung des Kühlstationgehäuses 3 horizontal entnommen werden. Die Rotationsgussanlage ist dann bereit, eine frisch mit Rotationsgussmaterial 10 beschickte kugelförmige Rotationsgussformhalterung 14 samt einer darin gehaltenen Rotationsgussform 16 zu empfangen und den geschilderten Ablauf von neuem zu beginnen.

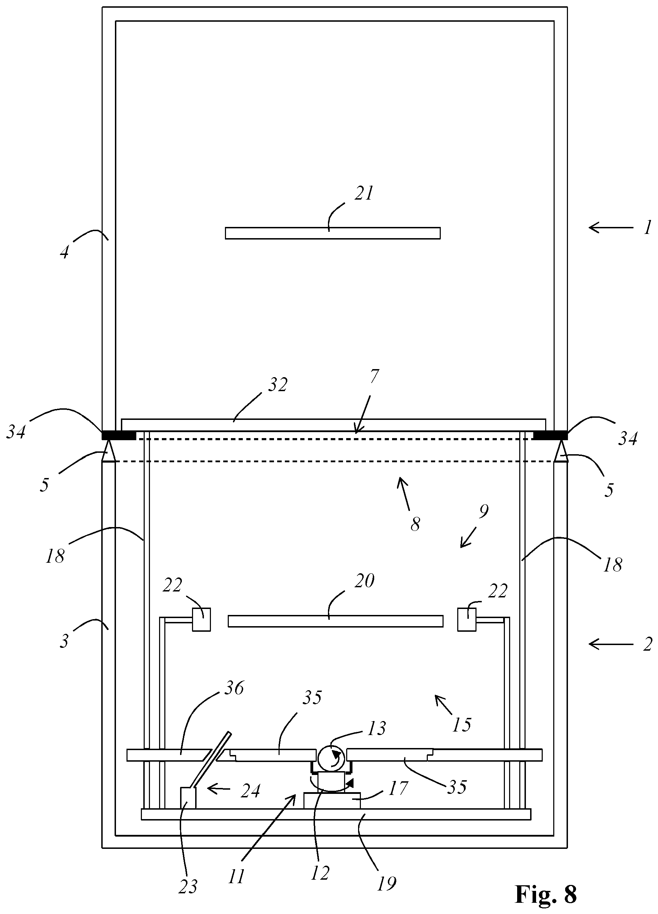

Figur 8 zeigt ein weiteres Ausführungsbeispiel einer erfindungsgemäßen Rotationsgussanlage, die einer Heizstation 1 und eine Kühlstation 2 aufweist. Die Heizstation 1 ist vertikal über der Kühlstation 2 angeordnet.

Die Kühlstation 2 weist ein Kühlstationgehäuse 3 und die Heizstation 1 ein Heizstationgehäuse 4 auf. Das Heizstationgehäuse 4 ist thermisch isolierend ausgebildet. Insbesondere kann vorteilhaft vorgesehen sein, dass das Heizstationgehäuse 4 doppelwandig ausgebildet ist, wobei zwischen den Wandungen vorteilhaft ein thermisch isolierendes Material, beispielsweise Glaswolle oder Schaumglas oder wenigstens eine Vakuumisolationspaneele oder ein anders Isolationsmaterial, angeordnet sein kann.

Zwischen dem Heizstationgehäuse 4 und dem Kühlstationgehäuse 3 sind eine thermische Isoliervorrichtung 5 und eine nach innen ragende Bürstendichtung 34 angeordnet. Die thermische Isoliervorrichtung 5 beinhaltet spitz zulaufende Abstandhalter 6, über die sich die auf der Kühlstation 2 stehende Heizstation 1 abstützt. Die thermische Isoliervorrichtung 5 ist umlaufend angrenzend an die vier unteren Kanten des Heizstationgehäuses 4 und an die vier oberen Kanten des Kühlstationgehäuses 3 angeordnet. Die thermische Isoliervorrichtung 5 verringert die Wärmeleitung von dem Heizstationgehäuse 4 zu dem Kühlstationgehäuse 3.

Die Rotationsgussanlage weist eine Rotationsvorrichtung 9 mit einem Rotationsantrieb 11 auf. Der Rotationsantrieb 11 beinhaltet einen ersten Antriebsmotor 12, der ein Antriebsrad 13 um eine horizontale Achse zur Rotation antreibt. Das Antriebsrad 13 ist dazu ausgebildet, in Reibungskontakt mit der Außenseite einer (in dieser Figur nicht dargestellten) Rotationsgussformhalterung 14 zu stehen, die in eine Aufnahme 15 der Rotationsvorrichtung 9 einfügbar ist.

In die Aufnahme 15 kann eine kugelförmige Rotationsgusshalterung 14, in der eine Rotationsgussform 16 gehalten ist, angeordnet und zur Rotation angetrieben werden. Dies ist in den Figuren 5, 6 und 7 dargestellt. Die Aufnahme 15 weist seitlich angeordnete Schleifplatten 22 auf, die eine Rotationsgussformhalterung 14 während des Rotationsvorganges in Position halten.

Das Antriebsrad 13 kann samt dem ersten Antriebsmotor 12 mittels eines zweiten Antriebsmotors 17 um eine vertikale Achse gedreht werden, um die Ausrichtung der horizontalen Rotationsachse, um die das Antriebsrad 13 rotiert, ändern zu können. Bei einer Änderung der Ausrichtung der horizontalen Rotationsachse, um die das Antriebsrad 13 rotiert, ändert sich automatisch auch die Ausrichtung der Rotationsachse, um die die Rotationsgussform 14 samt der darin gehaltenen Rotationsgussform 16 rotiert.

Das Antriebsrad 13 ragt durch einen Schlitz in einer runden Platte 35, die drehbar gelagert ist und die stets zusammen mit dem Antriebsrad 13 um eine vertikale Achse gedreht wird. Die Platte 35 ist drehbar in einer Rahmenplatte 36 gelagert.

Das Heizstationgehäuse 4 weist eine nach unten ausgerichtete Öffnung 7 und das Kühlstationgehäuse 3 eine nach oben ausgerichtete Öffnung 8 auf. Die obere Öffnung 8 des Kühlstationgehäuses 3 fluchtet mit der nach unten ausgerichteten Öffnung 7 des Heizstationgehäuses 4 derart, dass die gesamte Rotationsvorrichtung 9 samt einer in der Aufnahme 15 befindlichen Rotationsgussformhalterung 14 vertikal von der Kühlstation 2 in die Heizstation 1 und umgekehrt von der Heizstation 1 zurück in die Kühlstation 2 überführt werden kann. Zu diesem Zweck ist ein Aufzug mit (nicht dargestellten) Führungsschienen vorhanden. An den (nicht dargestellten) Führungsschienen ist eine Plattform 19 der Rotationsvorrichtung 9 motorisch angetrieben verschiebbar gelagert.

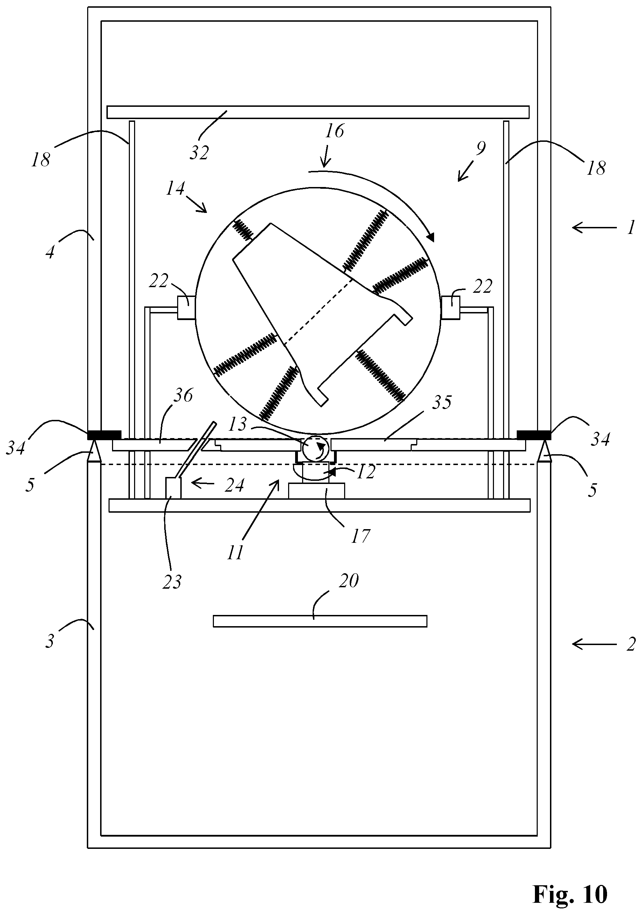

Die Platte 35 und die Rahmenplatte 36 verschließen an der Bürstendichtung 34 anliegend die nach unten ausgerichtete Öffnung 7 des Heizstationgehäuses 4, wenn sich der Aufzug in der oberen Position befindet, was in Figur 10 gezeigt ist.

Die Plattform 19 trägt vier Vertikalträger 18, die ihrerseits eine thermisch isolierende Deckelplatte 32, die parallel zu der Plattform 19 angeordnet ist, tragen. Die Deckelplatte 32 verschließt an der Bürstendichtung 34 anliegend die nach unten ausgerichtete Öffnung 7 des Heizstationgehäuses 4, wenn sich der Aufzug in der unteren Position befindet (Figuren 8, 9 und 11).

Die Kühlstation 2 weist ein (nicht näher dargestelltes) Kaltluftgebläse mit einer schlitzförmigen Kaltluftdüse 20 auf. Die Kaltluftdüse 20 ist derart ausgerichtet und angeordnet, dass der durch sie hindurch strömende Kaltluftstrom symmetrisch zu einer in der Kühlstation 2 angeordneten Rotationsgussformhalterung 14 ausgerichtet ist. Konkret ist die Kaltluftdüse 20 derart ausgerichtet, dass der Kaltluftstrom ein einer Äquatorebene auf die kugelförmige Rotationsgussformhalterung 14 trifft. Auf diese Weise ist vorteilhaft gewährleistet, dass die kugelförmige Rotationsgussformhalterung 14 durch den Kaltluftstrom nicht zusätzlich zur Rotation angetrieben wird.

Die Heizstation 1 weist ein (nicht näher dargestelltes) Heißluftgebläse auf, das eine schlitzförmige Heißluftdüse 21 beinhaltet. Die Heißluftdüse 21 ist derart ausgerichtet und angeordnet, dass der durch sie hindurch strömende Heißluftstrom symmetrisch zu einer in der Heizstation 1 angeordneten Rotationsgussformhalterung 14 ausgerichtet ist. Konkret ist die Heißluftdüse 21 derart ausgerichtet, dass der Heißluftstrom ein einer Äquatorebene auf die kugelförmige Rotationsgussformhalterung 14 trifft. Auf diese Weise ist vorteilhaft gewährleistet, dass die kugelförmige Rotationsgussformhalterung 14 durch den Heißluftstrom nicht zusätzlich zur Rotation angetrieben wird.

Es ist eine als Pyrometer 23 ausgebildete Temperaturmessvorrichtung 24 vorhanden, mittels der die Temperatur der Rotationsgussform 16 messbar ist. Eine Röhre des Pyrometers 23, durch die das Pyrometer Strahlung empfängt, ragt durch eine Öffnung in der Rahmenplatte 36.

Die Figur 8 zeigt das Ausführungsbeispiel der erfindungsgemäßen Rotationsgussanlage in einer Situation, in der die Rotationsgussanlage bereit ist, eine kugelförmige Rotationsgussformhalterung 14 mit einer darin gehaltenen Rotationsgussform 16 zu empfangen. Die kugelförmige Rotationsgussformhalterung 14 kann durch eine (nicht mehr dargestellte) seitliche Öffnung des Kühlstationgehäuses 2 horizontal in die Aufnahme 15 gebracht werden.

Vor dem Einfügen einer Rotationsgussformhalterung 14 mit einer darin gehaltenen Rotationsgussform 16 in die Aufnahme 15 ist es notwendig, die Rotationsgussform 16 mit Rotationsgussmaterial 10 zu beschicken. Bei dem dargestellten Ausführungsbeispiel ist die Rotationsgussform 16 zur Herstellung eines Pflanzengefäßes ausgebildet. Es gibt hinsichtlich der Art des herzustellenden Gegenstandes jedoch keine grundsätzlichen Beschränkungen.

Die kugelförmige Rotationsgussformhalterung 14 besteht aus einer ersten Halbkugel 25 und einer zweiten Halbkugel 26, die lösbar miteinander verbunden werden können. Die Rotationsgussform 16 ist ebenfalls zweiteilig aufgebaut und weist ein erstes Rotationsgussformteil 27 und ein zweites Rotationsgussformteil 28 auf. Das erste Rotationsgussformteil 27 ist mittels erster Federn 29 innen an der ersten Halbkugel 25 befestigt, während das zweite Rotationsgussformteil 28 mittels zweiter Federn 30 innen an der zweiten Halbkugel 26 befestigt ist. Die erste Halbkugel 25 kann samt dem ersten Rotationsgussformteil 27 von der zweiten Halbkugel 26 samt dem zweiten Rotationsgussformteil 28 abgehoben werden, um Rotationsgussmaterial 10 vor einem Rotationsvorgang in die Rotationsgussform 16 einbringen zu können und um nach einem Rotationsvorgang das hergestellte Produkt entnehmen zu können.

Nach dem Einbringen des Rotationsgussmaterials 10 wird das erste Rotationsgussformteil 27 auf das zweite Rotationsgussformteil 28 aufgesetzt und damit die Rotationsgussformhalterung 16 geschlossen. Anschließend kann die Rotationsgussformhalterung 14 mit einer darin gehaltenen Rotationsgussform 16 durch eine seitliche Öffnung der Kühlstation 2 in die Aufnahme 15 der Rotationsvorrichtung 9 gebracht werden.

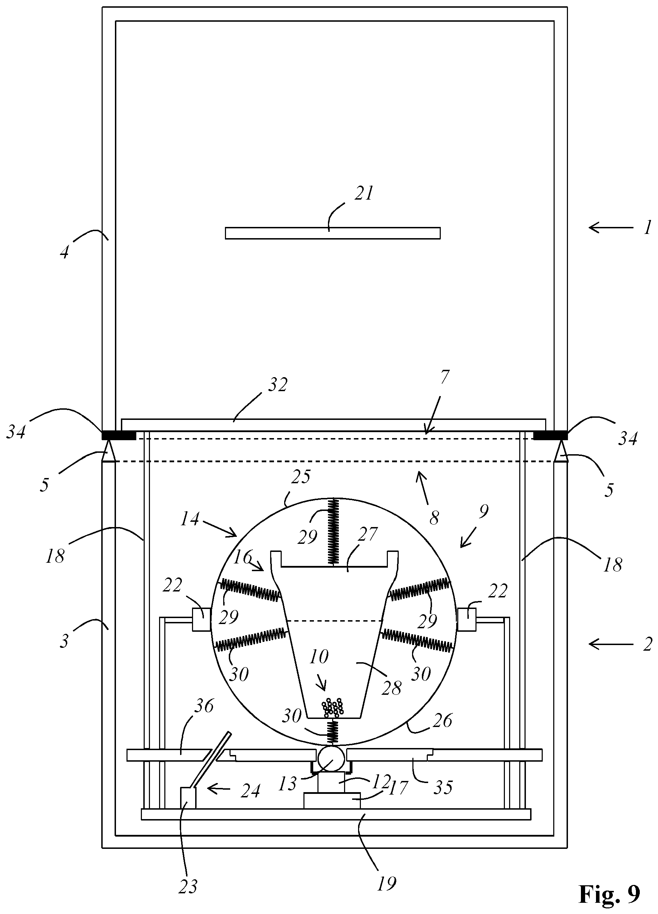

Figur 9 zeigt das Ausführungsbeispiel der Rotationsgussanlage, nachdem eine kugelförmige Rotationsgussformhalterung 14 samt einer darin gehaltenen Rotationsgussform 16 in die Aufnahme 15 eingebracht wurde. Anschließend wird die gesamte Rotationsvorrichtung 9 samt der in der Aufnahme befindlichen Rotationsgussformhalterung 14 und der Rotationsgussform 16 mittels des Aufzuges vertikal nach oben in die Heizstation 1 überführt.

Figur 10 zeigt die Situation, nachdem die gesamte Rotationvorrichtung samt der Rotationsgussformhalterung 14 und der Rotationsgussform 16 mittels des Aufzugs vertikal nach oben in die Heizstation 1 verbracht wurde.

In der Heizstation 1 wird die Rotationsgussform 16 mittels des Heißluftgebläses beheizt. Die Rotationsgussformhalterung 14 weist eine Vielzahl von Durchbrüchen auf, durch die der Heißluftstrom, der durch die Heißluftdüse 21 ausgeblasen wird, auf die Rotationsgussform 16 trifft. Die Rotationsgussform 16 wird gleichzeitig rotiert und beheizt, damit das zuvor eingefüllte Rotationsgussmaterial 10 aufschmelzen und sich an der Innenseite an der Rotationsgussform 16 anlagern kann. Es Die Rotationsgussformhalterung 14 wird hierbei mittels der seitlich angeordneten Schleifplatten 22 während ihrer Rotation in Position gehalten. Die Rotationsgussformhalterung 14 bleibt während des Rotationsvorganges innerhalb der Heizstation 1 ortsfest.

Nachdem sich das gesamte Rotationsgussmaterial 10 an die Innenwandung der Rotationsgussform 16 angelagert hat, wird die gesamte Rotationsvorrichtung 9 samt der in der Aufnahme 15 befindlichen Rotationsgussformhalterung 14 und der Rotationsgussform 16 mittels des Aufzuges vertikal nach unten in die Kühlstation 2 überführt. Hierbei wird die Rotationsgussformhalterung 14 samt der Rotationsgussform 16 weiter rotiert.

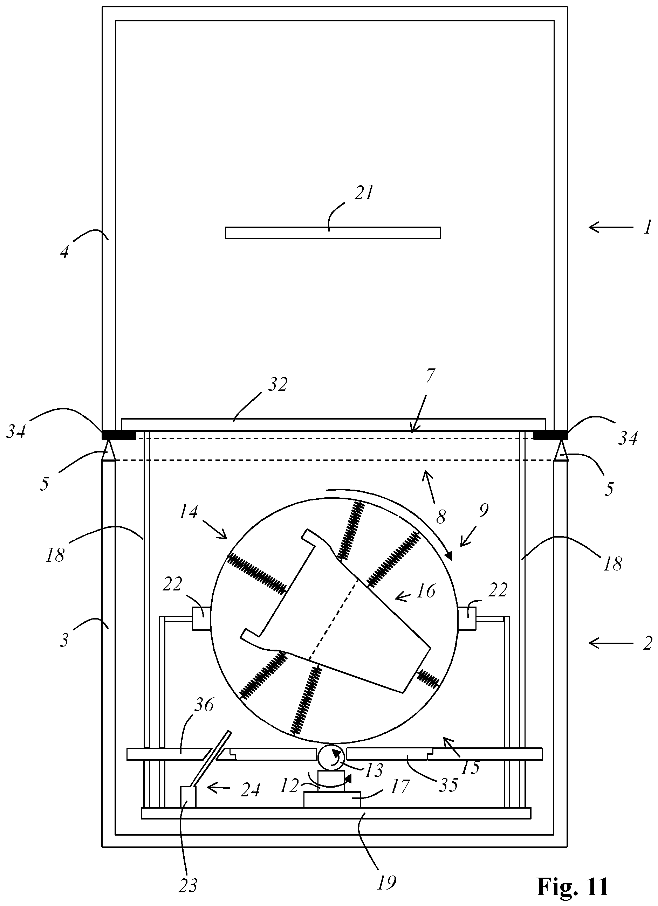

Figur 11 zeigt die Situation, nachdem die gesamte Rotationvorrichtung samt der Rotationsgussformhalterung 14 und der Rotationsgussform 16 mittels des Aufzugs vertikal nach unten zurück in die Kühlstation 2 verbracht wurde.

In der Kühlstation 2 wird die Rotationsgussform 16 aktiv mittels des Kaltluftgebläses gekühlt, während die Antriebsvorrichtung die kugelförmige Rotationsgussformhalterung 14 ununterbrochen zur Rotation antreibt.

Sobald mittels der Temperaturmessvorrichtung 24 festgestellt wurde, dass die Rotationsgussform 16 ausreichend abgekühlt ist, kann die kugelförmige Rotationsgussformhalterung 14 samt der Rotationsgussform 16 durch die (nicht dargestellte) seitliche Öffnung des Kühlstationgehäuses 3 horizontal entnommen werden. Die Rotationsgussanlage ist dann bereit, eine frisch mit Rotationsgussmaterial 10 beschickte kugelförmige Rotationsgussformhalterung 14 samt einer darin gehaltenen Rotationsgussform 16 zu empfangen und den geschilderten Ablauf von neuem zu beginnen.

Das in den Figuren 7 bis 11 dargestellte Ausführungsbeispiel hat den besonderen Vorteil, dass der Rotationsantrieb 11 (bis auf den kleinen Teil des durch die Platte 35 ragenden Antriebsrades 13) stets außerhalb der Heizstation 1 bleibt. Der Rotationsantrieb 11 wird dadurch nicht mit aufgeheizt, was den Rotationsantrieb 11 schont und zur Energieersparnis beiträgt.

### Bezugszeichenliste:

- 1: Rotationsgussformhalterung
- 2: Rotationsgussform
- 3: erste Halbkugel
- 4: zweite Halbkugel
- 5: erstes Rotationsgussformteil
- 6: zweites Rotationsgussformteil
- 7: erste Federn
- 8: zweite Federn
- 9: Rotationsgussmaterial
- 10: Antriebsvorrichtung
- 11: Antriebsmotor
- 12: Antriebsrad
- 13: weitere Antriebsvorrichtung
- 14: zweiter Antriebsmotor
- 15: Schleifplatte
- 16: Eingabevorrichtung
- 17: Anzeigevorrichtung
- 18: Eingabegerät
- 19: Steuerungsvorrichtung
- 20: Trajektoriensegmenttyp
- 21: Zeitstrahll
- 22: Trajektoriensegment
- 23: Trajektoriensegment
- 24: Trajektoriensegment
- 25: Trajektorie
- 26: Voransichtsdarstellung
- 27: Computermaus
- 28: Referenzpunkt
- 29: Auswahldarstellung

## Patentansprüche

1. Verfahren zum Betreiben einer Rotationsgussvorrichtung, die eine rotierbar gelagerte Rotationsgussformhalterung (1) mit einer Rotationsgussform (2) aufweist, **dadurch gekennzeichnet, dass** eine Trajektorie (25) eines Referenzpunktes (28) eines bei einem Rotationsvorgang rotierenden Bauteils, insbesondere der Rotationsgussformhalterung (1) oder der Rotationsgussform (2), für einen Rotationsvorgang aus einer von mehreren möglichen mit der Rotationsgussvorrichtung (1) ausführbaren Trajektorien (25) ausgewählt wird und dass anschließend ein Rotationsvorgang ausgeführt wird, bei dem sich in die Rotationsgussform (2) eingebrachtes Rotationsgussmaterial (9) an der Innenseite der Rotationsgussform (2) anlagert und bei dem sich der Referenzpunkt (28) entlang der festgelegten Trajektorie (25) bewegt.

2. Verfahren nach Anspruch 1, **dadurch gekennzeichnet, dass**
a. die Trajektorie (25) in Abhängigkeit von der Ausbildung der Rotationsgussform (2) ausgewählt wird, und/oder dass
b. die Trajektorie (25) derart ausgewählt wird, dass wenigstens eine Stelle der Innenseite der Rotationsgussform (2) bei dem Rotationsvorgang frei von Rotationsgussmaterial (9) bleibt, und/oder dass
c. die Trajektorie (25) derart ausgewählt wird, dass wenigstens eine Stelle der Innenseite der Rotationsgussform (2) bei dem Rotationsvorgang niemals unten angeordnet ist oder wenigstens eine Stelle der Innenseite der Rotationsgussform (2) während des Rotationsvorganges öfter unten angeordnet ist, als alle anderen Stellen, und/oder dass
d. wenigstens eine Trajektorie (25) von den mehreren möglichen mit der Rotationsgussvorrichtung ausführbaren Trajektorien, insbesondere über eine Schnittstelle der Rotationsgussvorrichtung, eingegeben wird, und/oder dass
e. der Referenzpunkt (28) derart gewählt wird, dass die Trajektorie (25) ausschließlich auf einer Kugelfläche verläuft.

3. Verfahren nach Anspruch 1 oder 2, **dadurch gekennzeichnet, dass** die Trajektorie (25) durch Eingeben von Trajektoriensegmenten (22, 23, 24) und Aneinanderfügen der eingegebenen Trajektoriensegmente (22, 23, 24) festgelegt wird.

4. Verfahren nach Anspruch 3, **dadurch gekennzeichnet, dass**
a. jedem Trajektoriensegment (22, 23, 24) eine Geschwindigkeit zugeordnet wird, mit der sich der Referenzpunkt (28) bei einem Rotationsvorgang entlang dem Trajektoriensegment (22, 23, 24) bewegt, oder dass jedem Trajektoriensegment (22, 23, 24) ein zeitlicher Geschwindigkeitsverlauf zugeordnet wird, mit dem sich der Referenzpunkt (28) bei einem Rotationsvorgang entlang dem Trajektoriensegment (22, 23, 24) bewegt, und/oder dass
b. das Eingeben eines Trajektoriensegments (22, 23, 24) die Eingabe wenigstens eines Parameters aus der Gruppe Trajektoriensegmentlänge, Trajektoriensegmentkrümmung, Trajektoriensegmentkrümmungsverlauf umfasst, und/oder dass
c. sich unmittelbar aufeinanderfolgende Trajektoriensegmente (22, 23, 24) durch die Trajektoriensegmentlänge und/oder die Trajektoriensegmentkrümmung und/oder Trajektoriensegmentskrümmungsverlauf und/oder durch eine zugeordnete Geschwindigkeit und/oder einen zugeordneten Geschwindigkeitsverlauf voneinander unterscheiden.

5. Verfahren nach Anspruch 3 oder 4, **dadurch gekennzeichnet, dass**
a. das Eingeben wenigstens eines der Trajektoriensegmente (22, 23, 24) ein Auswählen aus einer Auswahldarstellung unterschiedlicher Trajektoriensegmenttypen (20) umfasst, oder dass
b. das Eingeben wenigstens eines der Trajektoriensegmente (22, 23, 24) ein Auswählen aus einer Auswahldarstellung unterschiedlicher Trajektoriensegmenttypen (20) umfasst, wobei die Trajektoriensegmenttypen (22, 23, 24) jeweils in einer perspektivischen Darstellung dargestellt werden, oder dass
c. das Eingeben wenigstens eines der Trajektoriensegmente (22, 23, 24) ein Auswählen aus einer Auswahldarstellung unterschiedlicher Trajektoriensegmenttypen (20) umfasst, wobei die Trajektoriensegmenttypen (20) in der Auswahldarstellung jeweils als Projektion, insbesondere als stereoskopische Projektion oder eine Parallelprojektion oder eine Mercator-Projektion, auf eine ebene Fläche dargestellt werden, oder dass
d. das Eingeben wenigstens eines der Trajektoriensegmente ein Auswählen aus einer Auswahldarstellung unterschiedlicher Trajektoriensegmenttypen umfasst, wobei die Auswahldarstellung wenigstens einen Trajektoriensegmenttypen (22, 23, 24) umfasst, dessen Projektion eine Projektion aus der folgenden Gruppe ist: Kreissegment, Parabelsegment, Geradesegment, 90-Grad-Bogen, 180-Grad-Bogen, 270-Grad-Bogen, 360-Grad-Bogen, Schleifensegment, Projektion einer Kreisevolvente auf eine Kugeloberfläche, Spiralsegment, Stop-Segment.

6. Verfahren nach einem der Ansprüche 1 bis 5, **dadurch gekennzeichnet, dass**
a. die festgelegte Trajektorie (25) in einer Projektion auf eine zweidimensionale Ebene angezeigt wird, oder dass
b. die festgelegte Trajektorie (25) in einer Projektion auf eine zweidimensionale Ebene angezeigt wird, die eine Parallelprojektion oder eine stereografische Projektion oder eine Mercator-Projektion ist.

7. Verfahren nach einem der Ansprüche 1 bis 6, **dadurch gekennzeichnet, dass**
a. die Rotationsgussvorrichtung eine Kugelrotationsvorrichtung ist, und/oder dass
b. aus dem Verlauf der Trajektorie (25) eine zeitliche Abfolge von Ansteuersignalen für wenigstens einen die Rotation erzeugenden Antriebsmotor erzeugt wird, und/oder dass
c. die Rotationsgussformhalterung (1) als Kugel ausgebildet ist, die bei dem Rotationsvorgang zur Rotation angetrieben wird, und/oder dass
d. die Rotationsgussformhalterung (1) mittels eines Antriebsrades (12) angetrieben wird, das auf der Oberfläche der Kugel abrollt.

8. Rotationsgussvorrichtung, die eine rotierbar gelagerte Rotationsgussformhalterung (1) mit einer Rotationsgussform (2) aufweist, **dadurch gekennzeichnet, dass** eine Trajektorie (25) eines Referenzpunktes (28) eines bei einem Rotationsvorgang rotierenden Bauteils, insbesondere der Rotationsgussformhalterung (1) oder der Rotationsgussform (2), für einen Rotationsvorgang aus einer von mehreren möglichen mit der Rotationsgussvorrichtung ausführbaren Trajektorien (25) auswählbar ist und dass eine Steuerungsvorrichtung (19) nach einem Auswahlvorgang einen Rotationsvorgang, bei dem sich in die Rotationsgussform (2) eingebrachtes Rotationsgussmaterial (9) an der Innenseite der Rotationsgussform (2) anlagert, derart steuert, dass sich der Referenzpunkt (28) entlang einer ausgewählten Trajektorie (25) bewegt.

9. Rotationsgussvorrichtung nach Anspruch 8, **dadurch gekennzeichnet, dass**
a. eine Trajektorie (25) auswählbar ist, die derart ausgebildet ist, dass wenigstens eine Stelle der Innenseite der Rotationsgussform (2) bei dem Rotationsvorgang frei von Rotationsgussmaterial (9) bleibt, und/oder dass
b. eine Trajektorie (25) auswählbar ist, die derart ausgebildet ist, dass wenigstens eine Stelle der Innenseite der Rotationsgussform (2) bei dem Rotationsvorgang niemals unten angeordnet ist, und/oder dass
c. eine Trajektorie (25) auswählbar ist, die derart ausgebildet ist, dass wenigstens eine Stelle der Innenseite der Rotationsgussform (2) bei dem Rotationsvorgang öfter unten angeordnet ist, als alle anderen Stellen, und/oder dass
d. wenigstens eine mit der Rotationsgussvorrichtung ausführbare Trajektorie(25), insbesondere über eine Schnittstelle der Rotationsgussvorrichtung, eingebbar und zu den mehreren möglichen mit der Rotationsgussvorrichtung ausführbaren Trajektorien (25) aus denen eine Trajektorien (25) auswählbar ist hinzufügbar ist.

10. Rotationsgussvorrichtung nach Anspruch 8 oder 9, **dadurch gekennzeichnet, dass** einzelne Trajektoriensegmente (22, 23, 24) eingebbar sind und dass die Steuerungsvorrichtung (19) aus den eingegebenen Trajektoriensegmenten (22, 23, 24) die Trajektorie (25) durch Aneinanderreihen der eingegebenen Trajektoriensegmente (22, 23, 24) festlegt.

11. Rotationsgussvorrichtung nach Anspruch 10, **dadurch gekennzeichnet, dass**
a. eine Eingabevorrichtung (16) vorhanden ist, mittels der die Trajektoriensegmente (22, 23, 24) eingebbar sind, oder dass
b. eine Eingabevorrichtung vorhanden ist, mittels der die Trajektoriensegmente eingebbar sind, wobei die Eingabevorrichtung (16) eine Anzeigevorrichtung (17) aufweist, die eine Auswahldarstellung unterschiedlicher Trajektoriensegmenttypen (20) anzeigt, aus der Trajektoriensegmente (22, 23, 24) mittels eines Eingabegerätes auswählbar sind, oder dass
c. eine Eingabevorrichtung (16) vorhanden ist, mittels der die Trajektoriensegmente (22, 23, 24) eingebbar sind, wobei die Eingabevorrichtung (16) eine Anzeigevorrichtung (17) aufweist, die eine Auswahldarstellung unterschiedlicher Trajektoriensegmenttypen (20) anzeigt, aus der Trajektoriensegmente (22, 23, 24) mittels eines Eingabegerätes (18) auswählbar sind, wobei die Anzeigevorrichtung (17) die Trajektoriensegmenttypen (20) jeweils in einer perspektivischen Darstellung dargestellt, oder dass
d. eine Eingabevorrichtung vorhanden ist, mittels der die Trajektoriensegmente (22, 23, 24) eingebbar sind, wobei die Eingabevorrichtung (16) eine Anzeigevorrichtung (17) aufweist, die eine Auswahldarstellung unterschiedlicher Trajektoriensegmenttypen (20) anzeigt, aus der Trajektoriensegmente (22, 23, 24) mittels eines Eingabegerätes (18) auswählbar sind, wobei die Anzeigevorrichtung (17) die Trajektoriensegmenttypen (20) in der Auswahldarstellung jeweils als Projektion, insbesondere als stereoskopische Projektion oder eine Parallelprojektion oder eine Mercator-Projektion, auf eine ebene Fläche dargestellt, oder dass
e. eine Eingabevorrichtung (16) vorhanden ist, mittels der die Trajektoriensegmente (22, 23, 24) eingebbar sind, wobei die Eingabevorrichtung (16) eine Anzeigevorrichtung (17) aufweist, die eine Auswahldarstellung unterschiedlicherTrajektoriensegmenttypen (20) anzeigt, aus der Trajektoriensegmente (22, 23, 24) mittels eines Eingabegerätes (18) auswählbar sind, wobei die Auswahldarstellung wenigstens einen Trajektoriensegmenttypen (20) umfasst, dessen Projektion eine Projektion aus der folgenden Gruppe ist: Kreissegment, Parabelsegment, Geradesegment, 90-Grad-Bogen, 180-Grad-Bogen, 270-Grad-Bogen, 360-Grad-Bogen, Schleifensegment, Projektion einer Kreisevolvente auf eine Kugeloberfläche, Spiralsegment, Stop-Segment.

12. Rotationsgussvorrichtung nach Anspruch 11, **dadurch gekennzeichnet, dass**
a. zu jedem eigegebenen Trajektoriensegment (22, 23, 24) eine Geschwindigkeit oder ein Geschwindigkeitsverlauf, mit der bzw. dem sich der Referenzpunkt (28) bei einem Rotationsvorgang entlang dem Trajektoriensegment (22, 23, 24) bewegt, eingebbar ist, die bzw. den die Steuerungsvorrichtung (19) dem Trajektoriensegment (22, 23, 24) zuordnet, oder dass
b. das Eingeben eines Trajektoriensegments (22, 23, 24) die Eingabe wenigstens eines Parameters aus der Gruppe Trajektoriensegmentlänge, Trajektoriensegmentkrümmung, Trajektoriensegmentkrümmungsverlauf umfasst.

13. Rotationsgussvorrichtung nach einem der Ansprüche 8 bis 12, **dadurch gekennzeichnet, dass** die festgelegte Trajektorie (25) in einer Projektion, insbesondere Parallelprojektion oder eine stereografische Projektion oder eine Mercator-Projektion, auf eine zweidimensionale Ebene angezeigt wird.

14. Rotationsgussvorrichtung nach einem der Ansprüche 8 bis 13, **dadurch gekennzeichnet, dass**
a. die Rotationsgussvorrichtung eine Kugelrotationsvorrichtung ist, oder dass
b. die Rotationsgussformhalterung (1) als Kugel ausgebildet ist, die bei dem Rotationsvorgang zur Rotation angetrieben wird, oder dass
c. die Rotationsgussformhalterung (1) als Kugel ausgebildet ist, die bei dem Rotationsvorgang zur Rotation angetrieben wird, wobei die Rotationsgussformhalterung (1) mittels eines Antriebsrades (12) angetrieben wird, das um eine erste Rotationsachse rotiert und das auf der Oberfläche der Kugel abrollt, oder dass
d. die Rotationsgussformhalterung (1) als Kugel ausgebildet ist, die bei dem Rotationsvorgang zur Rotation angetrieben wird, wobei die Rotationsgussformhalterung (1) mittels eines Antriebsrades (12) angetrieben wird, das um eine erste Rotationsachse rotiert und das auf der Oberfläche der Kugel abrollt und das um eine zur ersten Rotationsachse senkrechte zweite Rotationsachse drehbar gelagert ist.

15. Rotationsgussvorrichtung nach einem der Ansprüche 8 bis 14, **dadurch gekennzeichnet, dass** die Steuerungsvorrichtung (19) aus dem Verlauf der Trajektorie (25) eine zeitliche Abfolge von Ansteuersignalen für wenigstens einen die Rotation erzeugenden Antriebsmotor (11) erzeugt.

## Claims

1. Method for operating a rotational-moulding device which comprises a rotatably mounted rotational-mould holder (1) with a rotational mould (2), **characterized in that** a trajectory (25) of a reference point (28) on a component, in particular the rotational-mould holder (1) or the rotational mould (2), rotating in the course of a rotation operation is selected for a rotation operation from one of multiple possible trajectories (25) that can be realized by the rotational-moulding device (1), and **in that** then a rotation operation is performed, during which rotational-moulding material (9) introduced into the rotational mould (2) accumulates on the inner side of the rotational mould (2) and during which the reference point (28) moves along the established trajectory (25).

2. Method according to Claim 1, **characterized in that**
**a.** the trajectory (25) is selected depending on the design of the rotational mould (2), and/or **in that**
**b.** the trajectory (25) is selected such that at least one location on the inner side of the rotational mould (2) remains free of rotational-moulding material (9) during the rotation operation, and/or **in that**
c. the trajectory (25) is selected such that at least one location on the inner side of the rotational mould (2) is never arranged at the bottom during the rotation operation or at least one location on the inner side of the rotational mould (2) is arranged at the bottom more often than all other locations during the rotation operation, and/or **in that**
d. at least one trajectory (25) from the multiple possible trajectories that can be realized by the rotational-moulding device is input, in particular via an interface of the rotational-moulding device, and/or in that
e. the reference point (28) is selected such that the trajectory (25) runs exclusively on one spherical surface.

3. Method according to Claim 1 or 2, **characterized in that** the trajectory (25) is established by inputting trajectory segments (22, 23, 24) and joining together the trajectory segments (22, 23, 24) that were input.

4. Method according to Claim 3, **characterized in that**
a. each trajectory segment (22, 23, 24) is assigned a speed at which the reference point (28) moves along the trajectory segment (22, 23, 24) during a rotation operation, or **in that** each trajectory segment (22, 23, 24) is assigned a speed variation over time with which the reference point (28) moves along the trajectory segment (22, 23, 24) during a rotation operation, and/or in that
b. the inputting of a trajectory segment (22, 23, 24) comprises the input of at least one parameter from the following group: trajectory segment length, trajectory segment curvature, trajectory segment curvature profile, and/or **in that**
c. trajectory segments (22, 23, 24) directly following one another differ from one another in terms of the trajectory segment length and/or the trajectory segment curvature and/or trajectory segment curvature profile and/or in terms of an assigned speed and/or an assigned speed variation.

5. Method according to Claim 3 or 4, **characterized in that**
a. the inputting of at least one of the trajectory segments (22, 23, 24) comprises making a selection from a selection display of different trajectory segment types (20), or **in that**
b. the inputting of at least one of the trajectory segments (22, 23, 24) comprises making a selection from a selection display of different trajectory segment types (20), wherein the trajectory segment types (22, 23, 24) are each depicted in a perspective depiction, or **in that**
c. the inputting of at least one of the trajectory segments (22, 23, 24) comprises making a selection from a selection display of different trajectory segment types (20), wherein the trajectory segment types (20) are each depicted in the selection display as a projection, in particular as a stereoscopic projection or a parallel projection or a Mercator projection, onto a planar surface, or **in that**
d. the inputting of at least one of the trajectory segments comprises making a selection from a selection display of different trajectory segment types, wherein the selection display comprises at least one trajectory segment type (22, 23, 24) the projection of which is a projection from the following group: segment of a circle, segment of a parabola, segment of a straight line, 90 degree arc, 180 degree arc, 270 degree arc, 360 degree arc, segment of a loop, projection of an involute of a circle onto a spherical surface, segment of a spiral, stop segment.

6. Method according to one of Claims 1 to 5, **characterized in that**
a. the established trajectory (25) is displayed in a projection onto a two-dimensional plane, or **in that**
b. the established trajectory (25) is displayed in a projection onto a two-dimensional plane which is a parallel projection or a stereographic projection or a Mercator projection.

7. Method according to one of Claims 1 to 6, **characterized in that**
a. the rotational-moulding device is a spherical rotational device, and/or **in that**
b. a temporal sequence of control signals for at least one drive motor generating the rotation is created from the profile of the trajectory (25), and/or **in that**
c. the rotational-mould holder (1) is in the form of a sphere, which is driven in rotation during the rotation operation, and/or **in that**
d. the rotational-mould holder (1) is driven by means of a drive wheel (12), which rolls on the surface of the sphere.

8. Rotational-moulding device which comprises a rotatably mounted rotational-mould holder (1) with a rotational mould (2), **characterized in that** a trajectory (25) of a reference point (28) on a component, in particular the rotational-mould holder (1) or the rotational mould (2), rotating in the course of a rotation operation can be selected for a rotation operation from one of multiple possible trajectories (25) that can be realized by the rotational-moulding device, and **in that**, after a selection operation, a control device (19) controls a rotation operation during which rotational-moulding material (9) introduced into the rotational mould (2) accumulates on the inner side of the rotational mould (2), in such a way that the reference point (28) moves along a selected trajectory (25).

9. Rotational-moulding device according to Claim 8, **characterized in that**
a. it is possible to select a trajectory (25) which is formed such that at least one location on the inner side of the rotational mould (2) remains free of rotational-moulding material (9) during the rotation operation, and/or **in that**
b. it is possible to select a trajectory (25) which is formed such that at least one location on the inner side of the rotational mould (2) is never arranged at the bottom during the rotation operation, and/or **in that**
c. it is possible to select a trajectory (25) which is formed such that at least one location on the inner side of the rotational mould (2) is arranged at the bottom more often than all other locations during the rotation operation, and/or **in that**
d. at least one trajectory (25) which can be realized by the rotational-moulding device can be input, in particular via an interface of the rotational-moulding device, and can be added to the multiple possible trajectories (25) which can be realized by the rotational-moulding device and from which a trajectory (25) can be selected.

10. Rotational-moulding device according to Claim 8 or 9, **characterized in that** individual trajectory segments (22, 23, 24) can be input, and **in that** the control device (19) establishes the trajectory (25) from the trajectory segments (22, 23, 24) that were input by stringing together the trajectory segments (22, 23, 24) that were input.

11. Rotational-moulding device according to Claim 10, **characterized in that**
a. an input device (16) by means of which the trajectory segments (22, 23, 24) can be input is present, or **in that**
b. an input device by means of which the trajectory segments can be input is present, wherein the input device (16) comprises a display device (17), which displays a selection display of different trajectory segment types (20) from which trajectory segments (22, 23, 24) can be selected by means of an input unit, or **in that**
c. an input device (16) by means of which the trajectory segments (22, 23, 24) can be input is present, wherein the input device (16) comprises a display device (17), which displays a selection display of different trajectory segment types (20) from which trajectory segments (22, 23, 24) can be selected by means of an input unit (18), wherein the display device (17) depicts each of the trajectory segment types (20) in a perspective depiction, or **in that**
d. an input device by means of which the trajectory segments (22, 23, 24) can be input is present, wherein the input device (16) comprises a display device (17), which displays a selection display of different trajectory segment types (20) from which trajectory segments (22, 23, 24) can be selected by means of an input unit (18), wherein the display device (17) depicts each of the trajectory segment types (20) in the selection display as a projection, in particular as a stereoscopic projection or a parallel projection or a Mercator projection, onto a planar surface, or **in that**
e. an input device (16) by means of which the trajectory segments (22, 23, 24) can be input is present, wherein the input device (16) comprises a display device (17), which displays a selection display of different trajectory segment types (20) from which trajectory segments (22, 23, 24) can be selected by means of an input unit (18), wherein the selection display comprises at least one trajectory segment type (20) the projection of which is a projection from the following group: segment of a circle, segment of a parabola, segment of a straight line, 90 degree arc, 180 degree arc, 270 degree arc, 360 degree arc, segment of a loop, projection of an involute of a circle onto a spherical surface, segment of a spiral, stop segment.

12. Rotational-moulding device according to Claim 11, **characterized in that**
a. for each trajectory segment (22, 23, 24) that was input, a speed or a speed variation with which the reference point (28) moves along the trajectory segment (22, 23, 24) during a rotation operation can be input, the speed or speed variation being assigned to the trajectory segment (22, 23, 24) by the control device (19), or **in that**
b. the inputting of a trajectory segment (22, 23, 24) comprises the input of at least one parameter from the following group: trajectory segment length, trajectory segment curvature, trajectory segment curvature profile.

13. Rotational-moulding device according to one of Claims 8 to 12, **characterized in that** the established trajectory (25) is displayed in a projection, in particular a parallel projection or a stereographic projection or a Mercator projection, onto a two-dimensional plane.

14. Rotational-moulding device according to one of Claims 8 to 13, **characterized in that**
a. the rotational-moulding device is a spherical rotational device, or **in that**
b. the rotational-mould holder (1) is in the form of a sphere, which is driven in rotation during the rotation operation, or **in that**
c. the rotational-mould holder (1) is in the form of a sphere, which is driven in rotation during the rotation operation, wherein the rotational-mould holder (1) is driven by means of a drive wheel (12), which rotates about a first axis of rotation and which rolls on the surface of the sphere, or **in that**
d. the rotational-mould holder (1) is in the form of a sphere, which is driven in rotation during the rotation operation, wherein the rotational-mould holder (1) is driven by means of a drive wheel (12), which rotates about a first axis of rotation and which rolls on the surface of the sphere and which is mounted so as to be able to rotate about a second axis of rotation which is perpendicular to the first axis of rotation.

15. Rotational-moulding device according to one of Claims 8 to 14, **characterized in that**, from the profile of the trajectory (25), the control device (19) creates a temporal sequence of control signals for at least one drive motor (11) generating the rotation.

## Revendications

1. Procédé d'exploitation d'un dispositif de moulage par rotation, qui présente un support de moule de moulage par rotation (1) monté de manière rotative avec un moule de moulage par rotation (2), **caractérisé en ce qu'**une trajectoire (25) d'un point de référence (28) d'un composant en rotation lors d'une opération de rotation, notamment du support de moule de moulage par rotation (1) ou du moule de moulage par rotation (2), est sélectionné pour une opération de rotation parmi l'une de plusieurs trajectoires (25) possibles pouvant être exécutées avec le dispositif de moulage par rotation (1) et **en ce qu'**ensuite une opération de rotation est exécutée, au cours de laquelle du matériau de moulage par rotation (9) introduit dans le moule de moulage par rotation (2) se dépose sur le côté intérieur du moule de moulage par rotation (2) et au cours de laquelle le point de référence (28) se déplace le long de la trajectoire (25) établie.

2. Procédé selon la revendication 1, **caractérisé en ce que**
a. la trajectoire (25) est choisie en fonction de la réalisation du moule de moulage par rotation (2), et/ou en ce que
b. la trajectoire (25) est choisie de telle sorte qu'au moins un emplacement du côté intérieur du moule de moulage par rotation (2) reste exempt de matériau de moulage par rotation (9) lors de l'opération de rotation, et/ou **en ce que**
c. la trajectoire (25) est choisie de telle sorte qu'au moins un emplacement du côté intérieur du moule de moulage par rotation (2) n'est jamais agencé en bas lors de l'opération de rotation ou qu'au moins un emplacement du côté intérieur du moule de moulage par rotation (2) est agencé en bas plus souvent que tous les autres emplacements pendant l'opération de rotation, et/ou **en ce que**
d. au moins une trajectoire (25) parmi les plusieurs trajectoires possibles pouvant être exécutées avec le dispositif de moulage par rotation est entrée, notamment par l'intermédiaire d'une interface du dispositif de moulage par rotation, et/ou **en ce que**
e. le point de référence (28) est choisi de telle sorte que la trajectoire (25) se déroule exclusivement sur une surface sphérique.

3. Procédé selon la revendication 1 ou 2, **caractérisé en ce que** la trajectoire (25) est établie par l'entrée de segments de trajectoire (22, 23, 24) et la juxtaposition des segments de trajectoire entrés (22, 23, 24).

4. Procédé selon la revendication 3, **caractérisé en ce que**
a. à chaque segment de trajectoire (22, 23, 24) est associée une vitesse à laquelle le point de référence (28) se déplace le long du segment de trajectoire (22, 23, 24) lors d'une opération de rotation, ou **en ce qu'**à chaque segment de trajectoire (22, 23, 24) est associée une courbe de vitesse temporelle à laquelle le point de référence (28) se déplace le long du segment de trajectoire (22, 23, 24) lors d'une opération de rotation, et/ou **en ce que**
b. l'entrée d'un segment de trajectoire (22, 23, 24) comprend l'entrée d'au moins un paramètre du groupe longueur de segment de trajectoire, courbure de segment de trajectoire, allure de courbure de segment de trajectoire, et/ou **en ce que**
c. des segments de trajectoire (22, 23, 24) directement successifs se distinguent les uns des autres par la longueur de segment de trajectoire et/ou la courbure de segment de trajectoire et/ou l'allure de courbure de segment de trajectoire et/ou par une vitesse associée et/ou une allure de vitesse associée.

5. Procédé selon la revendication 3 ou 4, **caractérisé en ce que**
a. l'entrée d'au moins l'un des segments de trajectoire (22, 23, 24) comprend une sélection parmi une représentation de sélection de différents types de segments de trajectoire (20), ou **en ce que**
b. l'entrée d'au moins l'un des segments de trajectoire (22, 23, 24) comprend une sélection parmi une représentation de sélection de différents types de segments de trajectoire (20), les types de segments de trajectoire (22, 23, 24) étant représentés chacun dans une représentation en perspective, ou **en ce que**
c. l'entrée d'au moins l'un des segments de trajectoire (22, 23, 24) comprend une sélection parmi une représentation de sélection de différents types de segments de trajectoire (20), les types de segments de trajectoire (20) étant représentés dans la représentation de sélection respectivement sous forme de projection, notamment sous forme de projection stéréoscopique ou d'une projection parallèle ou d'une projection de Mercator, sur une surface plane, ou **en ce que**
d. l'entrée d'au moins l'un des segments de trajectoire comprend la sélection parmi une représentation de sélection de différents types de segments de trajectoire, la représentation de sélection comprenant au moins un type de segment de trajectoire (22, 23, 24) dont la projection est une projection du groupe suivant : segment de cercle, segment de parabole, segment de droite, arc de 90 degrés, arc de 180 degrés, arc de 270 degrés, arc de 360 degrés, segment de boucle, projection d'une développante de cercle sur une surface sphérique, segment de spirale, segment d'arrêt.

6. Procédé selon l'une quelconque des revendications 1 à 5, **caractérisé en ce que**
a. la trajectoire établie (25) est affichée dans une projection sur un plan bidimensionnel, ou **en ce que**
b. la trajectoire établie (25) est affichée dans une projection sur un plan bidimensionnel, qui est une projection parallèle ou une projection stéréographique ou une projection de Mercator.

7. Procédé selon l'une quelconque des revendications 1 à 6, **caractérisé en ce que**
a. le dispositif de moulage par rotation est un dispositif de rotation à billes, et/ou **en ce que**
b. une séquence temporelle de signaux de commande pour au moins un moteur d'entraînement générant la rotation est générée à partir de l'allure de la trajectoire (25), et/ou **en ce que**
c. le support de moule de moulage par rotation (1) est réalisé sous la forme d'une bille qui est entraînée en rotation lors de l'opération de rotation, et/ou **en ce que**
d. le support de moule de moulage par rotation (1) est entraîné au moyen d'une roue d'entraînement (12) qui roule sur la surface de la sphère.

8. Dispositif de moulage par rotation, qui présente un support de moule de moulage par rotation (1) monté de manière rotative avec un moule de moulage par rotation (2), **caractérisé en ce qu'**une trajectoire (25) d'un point de référence (28) d'un composant en rotation lors d'une opération de rotation, notamment du support de moule de moulage par rotation (1) ou du moule de moulage par rotation (2), peut être sélectionnée pour une opération de rotation parmi l'une de plusieurs trajectoires (25) possibles pouvant être exécutées avec le dispositif de moulage par rotation et **en ce qu'**un dispositif de commande (19) commande, après une opération de sélection, une opération de rotation dans laquelle du matériau de moulage par rotation (9) introduit dans le moule de moulage par rotation (2) se dépose sur le côté intérieur du moule de moulage par rotation (2), de telle sorte que le point de référence (28) se déplace le long d'une trajectoire sélectionnée (25).

9. Dispositif de moulage par rotation selon la revendication 8, **caractérisé en ce que**
a. une trajectoire (25) peut être choisie, qui est réalisée de telle sorte qu'au moins un emplacement du côté intérieur du moule de moulage par rotation (2) reste exempt de matériau de moulage par rotation (9) lors de l'opération de rotation, et/ou **en ce que**
b. une trajectoire (25) peut être choisie, qui est réalisée de telle sorte qu'au moins un emplacement du côté intérieur du moule de moulage par rotation (2) n'est jamais agencé vers le bas lors de l'opération de rotation, et/ou **en ce que**
c. une trajectoire (25) peut être choisie, qui est réalisée de telle sorte qu'au moins un emplacement du côté intérieur du moule de moulage par rotation (2) est agencé plus souvent vers le bas que tous les autres emplacements lors de l'opération de rotation, et/ou **en ce que**
d. au moins une trajectoire (25) pouvant être exécutée avec le dispositif de moulage par rotation peut être entrée, notamment par l'intermédiaire d'une interface du dispositif de moulage par rotation, et peut être ajoutée aux plusieurs trajectoires (25) possibles pouvant être exécutées avec le dispositif de moulage par injection, parmi lesquelles une trajectoire (25) peut être sélectionnée.

10. Dispositif de moulage par injection selon la revendication 8 ou 9, **caractérisé en ce que** des segments de trajectoire (22, 23, 24) individuels peuvent être entrés et **en ce que** le dispositif de commande (19) détermine la trajectoire (25) à partir des segments de trajectoire (22, 23, 24) entrés, par juxtaposition des segments de trajectoire (22, 23, 24) entrés.

11. Dispositif de moulage par rotation selon la revendication 10, **caractérisé en ce que**
a. un dispositif d'entrée (16) est présent, au moyen duquel les segments de trajectoire (22, 23, 24) peuvent être entrés, ou **en ce que**
b. un dispositif d'entrée est présent, au moyen duquel les segments de trajectoire peuvent être entrés, le dispositif d'entrée (16) présentant un dispositif d'affichage (17) qui affiche une représentation de sélection de différents types de segments de trajectoire (20), parmi laquelle des segments de trajectoire (22, 23, 24) peuvent être sélectionnés au moyen d'un appareil d'entrée, ou **en ce que**
c. un dispositif d'entrée (16) est présent, au moyen duquel les segments de trajectoire (22, 23, 24) peuvent être entrés, le dispositif d'entrée (16) présentant un dispositif d'affichage (17) qui affiche une représentation de sélection de différents types de segments de trajectoire (20), parmi laquelle des segments de trajectoire (22, 23, 24) peuvent être sélectionnés au moyen d'un appareil d'entrée (18), le dispositif d'affichage (17) représentant les types de segments de trajectoire (20) respectivement dans une représentation en perspective, ou **en ce que**
d. un dispositif d'entrée est présent, au moyen duquel les segments de trajectoire (22, 23, 24) peuvent être entrés, le dispositif d'entrée (16) présentant un dispositif d'affichage (17), qui affiche une représentation de sélection de différents types de segments de trajectoire (20), parmi laquelle des segments de trajectoire (22, 23, 24) peuvent être sélectionnés au moyen d'un appareil d'entrée (18), le dispositif d'affichage (17) représentant les types de segments de trajectoire (20) dans la représentation de sélection respectivement sous forme de projection, notamment sous forme de projection stéréoscopique ou d'une projection parallèle ou d'une projection de Mercator, sur une surface plane, ou **en ce que**
e. un dispositif d'entrée (16) est présent, au moyen duquel les segments de trajectoire (22, 23, 24) peuvent être entrés, le dispositif d'entrée (16) présentant un dispositif d'affichage (17) qui affiche une représentation de sélection de différents types de segments de trajectoire (20), parmi laquelle des segments de trajectoire (22, 23, 24) peuvent être sélectionnés au moyen d'un appareil d'entrée (18), la représentation de sélection comprenant au moins un type de segment de trajectoire (20) dont la projection est une projection choisie dans le groupe suivant : segment de cercle, segment de parabole, segment de droite, arc de 90 degrés, arc de 180 degrés, arc de 270 degrés, arc de 360 degrés, segment de boucle, projection d'une développante de cercle sur une surface sphérique, segment de spirale, segment d'arrêt.

12. Dispositif de moulage par rotation selon la revendication 11, **caractérisé en ce que**
a. pour chaque segment de trajectoire (22, 23, 24) entré, une vitesse ou une allure de vitesse, avec laquelle ou selon laquelle le point de référence (28) se déplace lors d'une opération de rotation le long du segment de trajectoire (22, 23, 24), peut être entrée, que le dispositif de commande (19) associe au segment de trajectoire (22, 23, 24), ou **en ce que**
b. l'entrée d'un segment de trajectoire (22, 23, 24) comprend l'entrée d'au moins un paramètre du groupe longueur de segment de trajectoire, courbure de segment de trajectoire, allure de courbure de segment de trajectoire.

13. Dispositif de moulage par rotation selon l'une quelconque des revendications 8 à 12, **caractérisé en ce que** la trajectoire établie (25) est affichée dans une projection, notamment une projection parallèle ou une projection stéréographique ou une projection de Mercator, sur un plan bidimensionnel.

14. Dispositif de moulage par rotation selon l'une quelconque des revendications 8 à 13, **caractérisé en ce que**
a. le dispositif de moulage par rotation est un dispositif de rotation à billes, ou **en ce que**
b. le support de moule de moulage par rotation (1) est réalisé sous la forme d'une bille qui est entraînée en rotation lors de l'opération de rotation, ou **en ce que**
c. le support de moule de moulage par rotation (1) est réalisé sous la forme d'une sphère qui est entraînée en rotation lors de l'opération de rotation, le support de moule de moulage par rotation (1) étant entraîné au moyen d'une roue d'entraînement (12) qui tourne autour d'un premier axe de rotation et qui roule sur la surface de la sphère, ou **en ce que**
d. le support de moule de moulage par rotation (1) est réalisé sous la forme d'une sphère qui est entraînée en rotation lors de l'opération de rotation, le support de moule de moulage par rotation (1) étant entraîné au moyen d'une roue d'entraînement (12) qui tourne autour d'un premier axe de rotation et qui roule sur la surface de la sphère et qui est montée de manière rotative autour d'un deuxième axe de rotation perpendiculaire au premier axe de rotation.

15. Dispositif de moulage par rotation selon l'une quelconque des revendications 8 à 14, **caractérisé en ce que** le dispositif de commande (19) génère, à partir de l'allure de la trajectoire (25), une séquence temporelle de signaux de commande pour au moins un moteur d'entraînement (11) générant la rotation.
